# EUROPEAN PATENT APPLICATION

(11) **EP 4 578 754 A1**
(43) Date of publication of application: **02.07.2025**
(21) Application number: 23858567.3
(22) Date of filing: 28.02.2023
(51) Int. Cl.: B60W 50/12, B60W 50/14, B60W 60/00, B60S 3/04

(54) **VEHICLE CONTROL METHOD AND APPARATUS, AND VEHICLE**

(30) Priority: 31.08.2022 CN 202211057386
(71) Applicant: Shenzhen Yinwang Intelligent Technologies Co., Ltd., Shenzhen, Guangdong 518129 (CN)
(72) Inventor: QIU, Fengguang, Shenzhen, Guangdong 518129 (CN); NI, Hongfeng, Shenzhen, Guangdong 518129 (CN); CHEN, Yu, Shenzhen, Guangdong 518129 (CN); XIE, Jun, Shenzhen, Guangdong 518129 (CN); XU, Ping, Shenzhen, Guangdong 518129 (CN); XIE, Qi, Shenzhen, Guangdong 518129 (CN); XIA, Qizhong, Shenzhen, Guangdong 518129 (CN)
(74) Representative: Gill Jennings & Every LLP
(86) International application number: PCT/CN2023/078867
(87) International publication number: WO 2024/045524

(57) **Abstract**

A vehicle control method relates to the field of intelligent control technologies, and includes: Step S201: When a first mode of a vehicle is enabled, obtain a first parameter of the vehicle, where the first parameter includes a speed and/or a gear. Step S202: When the first parameter meets a first condition, perform a first operation corresponding to the first mode, where the first operation includes disabling an automatic power-on function of the vehicle. **In** this way, a vehicle-mounted component is flexibly controlled, so that a status of the vehicle-mounted component meets a requirement in a use scenario of the vehicle. This effectively improves user experience. An apparatus and a vehicle are further provided.

## Description

This application claims priority to Chinese Patent Application No. 202211057386.0, filed with the China National Intellectual Property Administration on August 31, 2022 and entitled "VEHICLE CONTROL METHOD, APPARATUS, AND VEHICLE", which is incorporated herein by reference in its entirety.

### TECHNICAL FIELD

This application relates to the field of intelligent control technologies, and in particular, to a vehicle control method, an apparatus, and a vehicle.

### BACKGROUND

With booming development of technologies, intelligence and internet of vehicles technologies are widely applied to vehicles. Users can flexibly control the vehicles through voice, gestures, touchscreen operations, and the like, to achieve more intelligent and convenient vehicle use experience. However, an intelligent function may bring some adverse consequences in a vehicle wash scenario, and may cause a property loss or even a threat to personal safety to the user. Therefore, how to control the vehicle to ensure a normal vehicle wash process and improve experience and safety of the user in the vehicle wash scenario is an urgent problem to be resolved.

### SUMMARY

Embodiments of this application provide a vehicle control method, an apparatus, and a vehicle, to flexibly control a vehicle-mounted component, so that a status of the vehicle-mounted component meets a requirement of a vehicle use scenario (for example, a vehicle wash scenario). This effectively improves user experience.

The vehicle control method provided in embodiments of this application may be performed by a control apparatus. The control apparatus may be abstracted as a computer system. The control apparatus may be an entire system, or may be a part of components in an entire system, for example, a system chip or a processing chip. Specifically, the control apparatus may be a terminal apparatus or a vehicle-mounted device like a vehicle-mounted computing platform, a vehicle-mounted controller, or a head unit in a vehicle, or may be a system chip, a decision-making processing chip, or another type of chip that can be disposed in the computer system of the vehicle or the vehicle-mounted device.

According to a first aspect, an embodiment of this application provides a vehicle control method. The method may be applied to a control apparatus. The method includes: when a first mode of a vehicle is enabled, obtaining a first parameter of the vehicle, where the first parameter includes a speed and/or a gear; and when the first parameter meets a first condition, performing a first operation corresponding to the first mode, where the first operation includes disabling an automatic power-on function of the vehicle.

In this embodiment of this application, in a possible implementation, the first mode may be a vehicle wash mode. When the vehicle wash mode of the vehicle is enabled, if the speed and/or the gear of the vehicle meet/meets the first condition, the automatic power-on function of the vehicle may be disabled. The automatic power-on function is a power-on mechanism of the vehicle. To be specific, when detecting that a door is opened or the vehicle is unlocked, the control apparatus controls the vehicle to be powered on. Therefore, the control apparatus disables the automatic power-on function of the vehicle, so that the vehicle can be prevented from being frequently powered on due to frequent opening of the door in the vehicle wash scenario, and a vehicle wash operation can be normally performed. This effectively improves vehicle wash experience of a user. In another possible implementation, the first mode may alternatively be another mode in which a problem similar to that in the vehicle wash scenario needs to be avoided, for example, may be a camping mode, or may be another user-defined mode.

In this embodiment of this application, the first parameter includes the speed and/or the gear, and when the first parameter meets the first condition, the first operation corresponding to the first mode is performed. In other words, in this embodiment of this application, the vehicle is allowed to enter the first mode only when the first parameter meets the first condition. For example, when the speed is very low but is not 0, the vehicle is allowed to enter the first mode; or the vehicle may be allowed to enter the first mode at a plurality of gears.

In a possible design, the first condition includes that the speed of the vehicle is less than or equal to a first threshold and/or the gear of the vehicle is a first gear. It may be understood that the vehicle wash scenario in this embodiment of this application relates to a static vehicle wash scenario and a mobile vehicle wash scenario. In the static vehicle wash scenario, the speed of the vehicle is 0. In other words, the vehicle is in a static state. In the mobile vehicle wash scenario, the speed of the vehicle is not 0. In other words, the vehicle is in a moving state. The first gear may be a P gear or an N gear. For example, the first condition may be that the speed of the vehicle is 0, and the gear of the vehicle is the P gear. Correspondingly, when the vehicle is shifted to the P gear and the speed is 0, the control apparatus disables the automatic power-on function of the vehicle, so that the vehicle can be prevented from being frequently powered on due to frequent opening of the door in the static vehicle wash scenario, and the vehicle wash operation can be normally performed. This effectively improves user experience. For another example, the first condition may be that the speed of the vehicle is less than or equal to 3 km/h, and the gear of the vehicle is the N gear. Correspondingly, when the vehicle is shifted to the N gear and the speed is less than 3 km/h, the control apparatus disables the automatic power-on function of the vehicle, so that the vehicle can be prevented from being frequently powered on due to frequent opening of the door in the mobile vehicle wash scenario, and the vehicle wash operation can be normally performed. This effectively improves user experience.

In a possible design, the first operation further includes controlling the vehicle to be powered off and/or disabling a first function of the vehicle, and the first function includes at least one of an automatic vehicle locking function, a warning function, a remote monitoring function, or a remote control function.

In this embodiment of this application, "vehicle power-off" may be understood as that all circuits in the vehicle are turned off. In other words, a power supply device of the vehicle stops supplying power to the vehicle. When the vehicle is powered off, all components of the vehicle are not energized. Therefore, in this design, when the first mode is enabled, the control apparatus controls the vehicle to be powered off, so that the user can be prevented from moving the vehicle or causing an insulation fault due to a misoperation in the vehicle wash scenario. This can effectively improve safety of the user during a vehicle wash and help the user clean the vehicle-mounted component (for example, a vehicle-mounted display) inside the vehicle, thereby effectively improving convenience of the vehicle wash operation.

In this embodiment of this application, the automatic vehicle locking function is a vehicle locking mechanism. To be specific, when detecting that the user leaves the inside of the vehicle or the door is closed, the control apparatus controls the vehicle to be locked. In a possible implementation, the warning function may also be referred to as a "sentry mode", and is a security monitoring mechanism of the vehicle. To be specific, when detecting an emergency, the control apparatus controls a prompt apparatus to output corresponding warning prompt information. For example, when detecting that a stranger touches the vehicle, the control apparatus may control the prompt apparatus to output a corresponding prompt tone. The remote control function is a controlled mode of the vehicle. In this controlled mode, the vehicle-mounted component is controlled by a user terminal. Therefore, in this design, when the first mode is enabled, the control apparatus disables the automatic vehicle locking function, so that the vehicle can be prevented from being frequently locked because the user frequently enters or exits the vehicle or frequently opens or closes the door in the vehicle wash scenario, and the vehicle wash operation can be normally performed. This further improves vehicle wash experience of the user. In addition, when the first mode is enabled, the control apparatus disables the warning function, so that the vehicle can be prevented from outputting alarm information because the user touches the vehicle in the vehicle wash scenario, to effectively avoid interference of the alarm information to the user. This further improves the vehicle wash experience of the user. In addition, when the first mode is enabled, the control apparatus disables the remote control function, so that the vehicle-mounted component is not remotely controlled by a terminal device of the user in the vehicle wash scenario, interference caused by the remote control to a vehicle wash person is avoided, and the vehicle wash operation can be normally performed. This further improves the vehicle wash experience of the user. It should be understood that, in this embodiment of this application, one or more of the automatic vehicle locking function, the warning function, or the remote control function may be disabled at the same time. Specifically, corresponding adjustment may be performed in different vehicle wash scenarios.

In a possible design, the first operation further includes adjusting a status of a component of the vehicle, and the component includes one or more of the following: a gear shifter, a rear trunk lock, a front trunk lock, a door lock, a window, a door handle, a charge port cover, a fuel filler cap, a wiper, an exterior rear view mirror, an interior rear view mirror, a sunroof, a panoramic roof, a sunshade, a steering wheel, or a seat. In this design, when the first mode is enabled, the status of the component is adjusted, so that the status of the component meets a requirement of the vehicle wash scenario. For example, if the component includes the gear shifter of the vehicle, when the first mode is enabled, the control apparatus adjusts the gear shifter to the P gear or the N gear, so that the gear shifter of the vehicle is applicable to the different vehicle wash scenarios. For another example, if the component includes the door handle, when the first mode is enabled, the control apparatus adjusts a status of the door handle to a retracted state, so that in a scenario of cleaning the exterior of the vehicle, water can be effectively prevented from entering the vehicle from the door handle. For another example, when the component is the steering wheel, the control apparatus may adjust a location and an angle of the steering wheel. For another example, when the component is the seat, the control apparatus may adjust a location, an angle, or a posture of the seat, to prevent the seat from blocking another component inside the vehicle, and help the user clean the components inside the vehicle. For another example, when the component is the panoramic roof, the control apparatus may adjust a transmittance of the panoramic roof, so that there is sufficient light in the vehicle, to help the user clean the component inside the vehicle. For another example, when the component is the sunshade, the control apparatus may adjust an opening/closing location or a moving location of the sunshade, to help the user clean an inner side of the window. For another example, if the component includes the sunroof of the vehicle, when the first mode is enabled, the control apparatus may control the sunroof to close, so that in a scenario of cleaning the exterior of the vehicle, water can be effectively prevented from entering the vehicle from the sunroof. For another example, when the component is the front trunk lock, the control apparatus may adjust opening/closing or an opening/closing angle of a front trunk, to help the user clean the front trunk lock. For another example, when the component is the rear trunk lock, the control apparatus may adjust opening/closing or an opening/closing angle of a rear trunk, to help the user clean the rear trunk lock. For another example, when the component is the exterior rear view mirror, the control apparatus may adjust an angle of a rear exterior rear view mirror, to help the user clean a body. For another example, when the component is the interior rear view mirror, the control apparatus may adjust an angle of the interior and exterior rear view mirrors, to help the user clean a body.

Further, the static vehicle wash scenario includes an in-vehicle wash scenario and an out-vehicle wash scenario. In the in-vehicle wash scenario, components inside the vehicle are cleaned. In the out-vehicle wash scenario, components outside the vehicle are cleaned.

In a possible design, the first mode includes a first submode, the first submode is used to clean a first area inside the vehicle, and the first area includes a first display of the vehicle. The method further includes: obtaining a first instruction, where the first instruction instructs to enable the first submode; enabling the first submode in response to the first instruction; and performing a second operation corresponding to the first submode, where the second operation includes adjusting the gear of the vehicle to the P gear. The first instruction may be a human-computer interaction instruction or a remote control instruction. In this design, the first submode used to clean the component inside the vehicle is set. The first submode is applicable to the in-vehicle wash scenario, and can meet a requirement of the in-vehicle wash scenario. In addition, a plurality of manners of flexibly controlling enabling of the first submode of the vehicle are provided, to help the user control the first submode. This effectively improves user experience. The second operation includes adjusting the gear of the vehicle to the P gear. It should be noted that, when the component inside the vehicle is cleaned, if the vehicle moves, personal safety of the vehicle wash person is threatened. Therefore, in this design, in the in-vehicle wash scenario, the gear of the vehicle is adjusted to the P gear, so that a security risk caused by vehicle movement in the in-vehicle wash scenario can be effectively prevented. This effectively improves security of the vehicle wash operation.

In a possible design, the control apparatus needs to determine that the vehicle meets a second condition, where the second condition includes that the first mode is enabled on the vehicle, a second submode is not enabled on the vehicle, the speed of the vehicle is less than or equal to a second threshold, or a status of the gear of the vehicle is the P gear or the N gear. The second submode is used to move the vehicle to a first location. In this design, the control apparatus enables the first submode when determining that the first mode is enabled on the vehicle, so that the first submode can be prevented from being enabled by a misoperation of the user. This effectively improves user experience. In addition, the control apparatus enables the first submode when determining that the second submode is not enabled currently, so that a security risk caused by interruption of the second submode can be prevented. This further improves security of the vehicle wash operation. The control apparatus enables the first submode when determining that the speed of the vehicle is less than or equal to the second threshold, so that the speed of the vehicle meets the requirement of the vehicle wash scenario. The control apparatus enables the first submode when determining that the gear of the vehicle is the P gear or the N gear, so that the first submode (namely, the in-vehicle wash mode) can be prevented from being enabled by a misoperation of the user when the vehicle is moving forward (that is, the vehicle is shifted to a D gear). This effectively improves user experience. In addition, the control apparatus enables the first submode after determining that the first mode is enabled on the vehicle, the second submode is not enabled, the speed of the vehicle is less than or equal to the second threshold, and the gear of the vehicle is the P gear or the N gear. This can improve security of the vehicle wash operation, and can also improve user experience.

In a possible design, the control apparatus may further obtain a second instruction, where the second instruction instructs to disable the first submode; and disable the first submode in response to the second instruction, where the second instruction includes at least one of a power-on signal, a vehicle locking signal, or a user instruction. The power-on signal may be a brake signal, an unlock signal, or an engine startup signal, and the user instruction may be a human-computer interaction instruction or a remote control instruction. This is not specifically limited in this embodiment of this application. In this design, a plurality of manners of controlling disabling of the first submode of the vehicle are provided, to help the user flexibly control the first submode. This effectively improves user experience.

In a possible design, the first mode includes the second submode, and the second submode is used to move the vehicle to the first location. The control apparatus may further obtain a third instruction, where the third instruction instructs to enable the second submode; enable the second submode in response to the third instruction; and perform a third operation corresponding to the second submode, where the third operation includes adjusting the gear of the vehicle to the N gear. The third instruction may be a human-computer interaction instruction or a remote control instruction. This is not specifically limited in this embodiment of this application. The "first location" may be understood as a geographical location of the vehicle wash operation, for example, a vehicle wash room. In this design, the second submode used to move the vehicle to the first location is set. The second submode may be applied to the mobile vehicle wash scenario (for example, a scenario in which the vehicle is moved to the vehicle wash room), to effectively meet a requirement of the mobile vehicle wash scenario. In addition, a plurality of manners of flexibly controlling enabling of the second submode of the vehicle are provided, to help the user control the second submode. This effectively improves user experience. The operation corresponding to the second submode includes adjusting the gear of the vehicle to the N gear. It should be noted that, in the scenario in which the vehicle is moved to the laundry, if the gear of the vehicle is the P gear, an electrical park brake (electrical park brake, EPB) of the vehicle is damaged by a conveyor. Therefore, in this design, when the second submode is enabled, the control apparatus adjusts the gear of the vehicle to the N gear, so that a vehicle brake system can be prevented from being damaged by the conveyor in the scenario in which the vehicle is moved to the laundry.

In a possible design, the control apparatus needs to determine that the vehicle meets a third condition, where the third condition includes that the first mode is enabled on the vehicle, the first submode is not enabled on the vehicle, the speed of the vehicle is less than or equal to a third threshold, or the status of the gear of the vehicle is the D gear. In this design, the control apparatus enables the second submode when determining that the first mode is enabled on the vehicle, so that the second submode can be prevented from being enabled by a misoperation of the user. This effectively improves user experience. In addition, the control apparatus enables the second submode when determining that the first submode is not enabled currently, so that a security risk caused by interruption of the first submode can be prevented. This further improves security of the vehicle wash operation. The control apparatus enables the second submode when determining that the speed of the vehicle is less than or equal to the third threshold, so that the speed of the vehicle meets the requirement of the vehicle wash scenario. The control apparatus enables the second submode when determining that the gear of the vehicle is the D gear, so that the status of the gear of the vehicle meets the requirement of the mobile vehicle wash scenario. In addition, the control apparatus enables the second submode only after determining that the first mode is enabled on the vehicle, the second submode is not enabled currently, the speed of the vehicle is less than or equal to the third threshold, and the status of the gear of the vehicle is the D gear. This can improve security of the vehicle wash operation, and can also improve user experience.

In a possible design, the control apparatus may further obtain a fourth instruction, where the fourth instruction instructs to disable the second submode; and disable the second submode in response to the fourth instruction; or disable the second submode when detecting that the speed of the vehicle is greater than or equal to a fourth threshold and/or that the gear of the vehicle is not the N gear. The fourth instruction may be a human-computer interaction instruction or a remote control instruction. In this design, a plurality of manners of controlling disabling of the second submode of the vehicle are provided, to help the user control the second submode. This effectively improves user experience.

In a possible design, the control apparatus may further control the exterior rear view mirror or the exterior rear view mirror of the vehicle to maintain a first state. The "first state" may be understood as a folded state. Therefore, in this design, regardless of whether the vehicle is in a power-on state or a power-off state, a rear view mirror remains in the folded state, so that a status of the rear view mirror meets the requirement of the vehicle wash scenario.

In a possible design, the control apparatus may further obtain a fifth instruction, where the fifth instruction indicates a fourth operation, and the fourth operation is an operation opposite to the first operation; and control the prompt apparatus to output first prompt information, where the first prompt information indicates risk information corresponding to the fourth operation. The fifth instruction may be a remote control instruction or a human-computer interaction instruction. In this design, after performing the first operation (for example, disabling the automatic power-on function of the vehicle), if detecting that the user wants to perform the fourth operation opposite to the first operation, the control apparatus may control the prompt apparatus to output a corresponding risk warning, so that the user can perceive necessity of performing the first operation, and then a vehicle wash process can be smoothly performed.

In a possible design, the control apparatus may further control the prompt apparatus to output second prompt information, where the second prompt information indicates that a fifth operation in the first operation fails to be performed; and obtain a sixth instruction, where the sixth instruction instructs to perform the fifth operation again. The sixth instruction includes a remote control instruction or a human-computer interaction instruction. In this design, in a process of performing the first operation, if it is found that a partial operation (namely, the fifth operation) in the first operation fails to be performed, the prompt apparatus is controlled to output corresponding prompt information, so that the user may input the sixth instruction, and the fifth operation may be performed again in response to the sixth instruction, so that a status of the vehicle-mounted component better meets the requirement of the vehicle wash scenario. The sixth instruction may be, for example, a tap operation for a physical button.

In a possible design, the control apparatus may further obtain a seventh instruction, where the seventh instruction instructs to disable the first mode; and disable the first mode in response to the seventh instruction; or the control apparatus may further disable the first mode when detecting that the speed of the vehicle is greater than or equal to a fifth threshold, where the seventh instruction includes a remote control instruction or a human-computer interaction instruction. In this design, the vehicle may be controlled, based on the detected remote control instruction or human-computer interaction instruction, to disable the first mode, so that the user can flexibly control disabling of the first mode. This effectively improves user experience. Alternatively, when it is detected that the speed of the vehicle is greater than or equal to the fifth threshold, the first mode may be disabled. In this way, the first mode can be automatically disabled without a user operation. This further improves the vehicle wash experience of the user.

In a possible design, the control apparatus may further store status information of the vehicle before the vehicle is in the power-off state; and obtain the status information of the vehicle after the vehicle is powered on. The "status information of the vehicle" may be understood as a status setting performed by the user on the vehicle-mounted component in the first mode, for example, at least one of an automatic power-on function, an automatic vehicle locking function, a remote control function, or an automatic gear switching function is disabled. In this design, when the user enables the first mode, the status information set for the vehicle before the vehicle is in the power-off state may be saved. In this way, after the vehicle is powered on again, the status information of the vehicle may be automatically obtained, so that the first mode may be entered based on the status information, and the user does not need to set the status information again.

In a possible design, the control apparatus may further exit a vehicle owner account and enter a guest mode. In this design, the guest mode is provided. After the vehicle owner account is exited, the guest mode is enabled, so that the vehicle wash person has permission to operate the first mode in the vehicle wash process. This helps the vehicle wash operation to be performed smoothly.

In a possible design, the control apparatus may further obtain a power-on signal, and control, based on the power-on signal, the vehicle to be powered on; and re-enter the first mode; or the control apparatus may further control the prompt apparatus to output third prompt information, where the third prompt information indicates the user to choose whether to re-enter the first mode. In this design, when the power-on signal is obtained, the vehicle may be controlled to be powered on; and after the vehicle is powered on, the vehicle may automatically enter the first mode; or after the vehicle is powered on, the prompt apparatus may be controlled to output the third prompt information, to guide the user to perform a corresponding operation, so that the vehicle enters the first mode.

It should be noted that the "user" herein may be a vehicle owner or the vehicle wash person. This is not specifically limited in this embodiment of this application. This design is particularly applicable to a scenario in which the vehicle wash person controls the vehicle to be powered on after the vehicle owner logs out of the account. In this scenario, the vehicle automatically enters the first mode after being powered on, or the vehicle wash person is guided to control the vehicle to enter the first mode, so that the vehicle wash person can efficiently and conveniently perform the vehicle wash operation.

In a possible design, the control apparatus may further obtain an eighth instruction, where the eighth instruction instructs to enable the first mode. The eighth instruction may be a human-computer interaction instruction or a remote control instruction. The human-computer interaction instruction may be any one of a voice instruction, a gesture instruction, or a text instruction. The remote control instruction is an instruction sent by the user terminal to the control apparatus. In this design, a plurality of manners of flexibly controlling enabling of the first mode of the vehicle are provided, to help the user control the first mode. This effectively improves user experience.

In a possible design, after the first mode of the vehicle is enabled, the method further includes: obtaining a power-off signal, and controlling the vehicle to be powered off. The power-off signal may be, for example, any one of a door closing signal, a vehicle locking signal, or a remote control instruction. In this design, when the first mode of the vehicle is enabled, a plurality of methods for flexibly controlling the vehicle to be powered off are provided, so that the vehicle wash operation can be performed in a vehicle power-off state. This effectively improves security of the vehicle wash operation.

According to a second aspect, an embodiment of this application further provides a control apparatus, including a controller and a memory. The memory is configured to store a program. The controller is configured to execute the program stored in the memory, so that the apparatus implements the method according to the first aspect and any one of the possible designs of the first aspect.

According to a third aspect, an embodiment of this application further provides a control apparatus. The control apparatus includes:
an obtaining module, configured to: when a first mode of a vehicle is enabled, obtain a first parameter of the vehicle, where the first parameter includes a speed and/or a gear; and
a control module, configured to: when the first parameter meets a first condition, perform a first operation corresponding to the first mode on the vehicle, where the first operation includes disabling an automatic power-on function of the vehicle.

In a possible design, the first operation further includes controlling the vehicle to be powered off and/or disabling a first function of the vehicle, and the first function includes at least one of an automatic vehicle locking function, a warning function, a remote monitoring function, or a remote control function.

In a possible design, the first operation further includes adjusting a status of a component of the vehicle, and the component includes one or more of the following: a gear shifter, a door, a window, a door handle, a charge port cover, a fuel filler cap, a wiper, a rear view mirror, a sunroof, or a vehicle-mounted device.

In a possible design, the first condition includes that the speed of the vehicle is less than or equal to a first threshold and/or the gear of the vehicle is a first gear.

In a possible design, the first mode includes a first submode, the first submode is used to clean a first area inside the vehicle, and the first area includes a first display of the vehicle. The obtaining module is further configured to obtain a first instruction, where the first instruction instructs to enable the first submode; and the control module is further configured to: enable the first submode in response to the first instruction; and perform a second operation corresponding to the first submode, where the second operation includes adjusting the gear of the vehicle to a P gear.

In a possible design, the control module is further configured to determine that the vehicle meets a second condition, where the second condition includes that the first mode is enabled on the vehicle, a second submode is not enabled on the vehicle, the speed of the vehicle is less than or equal to a second threshold, or a status of the gear of the vehicle is the P gear or an N gear. The second submode is used to move the vehicle to a first location.

In a possible design, the obtaining module is further configured to obtain a second instruction, where the second instruction instructs to disable the first submode; and the control module is further configured to disable the first submode in response to the second instruction, where the second instruction includes at least one of a power-on signal, a vehicle locking signal, or a user instruction.

In a possible design, the first mode includes the second submode, and the second submode is used to move the vehicle to the first location; the obtaining module is further configured to obtain a third instruction, where the third instruction instructs to enable the second submode, and the third instruction includes a human-computer interaction instruction or a remote control instruction; and the control module is further configured to enable the second submode in response to the third instruction, and perform a third operation corresponding to the second submode, where the third operation includes adjusting the gear of the vehicle to the N gear.

In a possible design, the control module is further configured to determine that the vehicle meets a third condition, where the third condition includes that the first mode is enabled on the vehicle; the first submode is not enabled on the vehicle, where the first submode is used to clean the inside of the vehicle; the speed of the vehicle is less than or equal to a third threshold; or the status of the gear of the vehicle is a D gear.

In a possible design, the obtaining module is further configured to obtain a fourth instruction, where the fourth instruction instructs to disable the second submode; and the control module is further configured to disable the second submode in response to the fourth instruction; or the control module is further configured to disable the second submode when detecting that the speed of the vehicle is greater than or equal to a fourth threshold and/or that the gear of the vehicle is not the N gear.

In a possible design, the control module is further configured to control the exterior rear view mirror or the exterior rear view mirror of the vehicle to maintain a first state.

In a possible design, the obtaining module is further configured to obtain a fifth instruction, where the fifth instruction indicates a fourth operation, and the fourth operation is an operation opposite to the first operation; and the control module is further configured to control a prompt apparatus to output first prompt information, where the first prompt information indicates risk information corresponding to the fourth operation.

In a possible design, the control module is further configured to control the prompt apparatus to output second prompt information, where the second prompt information indicates that a fifth operation in the first operation fails to be performed; and the obtaining module is further configured to obtain a sixth instruction, where the sixth instruction instructs to perform the fifth operation again.

In a possible design, the obtaining module is further configured to obtain a seventh instruction, where the seventh instruction instructs to disable the first mode; and the control module is further configured to disable the first mode in response to the seventh instruction; or the control module is further configured to disable the first mode when detecting that the speed of the vehicle is greater than or equal to a fifth threshold, where the seventh instruction includes a remote control instruction or a human-computer interaction instruction.

In a possible design, the obtaining module is further configured to obtain an eighth instruction, where the first instruction instructs to enable the first mode, and the first instruction includes a human-computer interaction instruction or a remote control instruction.

In a possible design, the apparatus further includes a storage module. The storage module is configured to store status information of the vehicle before the vehicle is in a power-off state; and the obtaining module is further configured to obtain the status information of the vehicle after the vehicle is powered on.

In a possible design, the control module is further configured to exit a vehicle owner account and enter a guest mode.

In a possible design, the obtaining module is further configured to obtain a power-on signal, and control, based on the power-on signal, the vehicle to be powered on; and the control module is further configured to re-enter the first mode, or the control module is further configured to control the prompt apparatus to output third prompt information, where the third prompt information indicates a user to choose whether to re-enter the first mode.

In a possible design, after the first mode of the vehicle is enabled, the obtaining module is further configured to obtain a power-off signal; and the control module is further configured to control, based on the power-off signal, the vehicle to be powered off.

According to a fourth aspect, an embodiment of this application further provides a vehicle control method, including: generating a prompt message when a preset condition is met, where the prompt message is used to prompt a user to enable a vehicle wash mode, and the preset condition includes that a vehicle is located in a vehicle wash shop and is in a parked state; receiving a user instruction, where the user instruction instructs to enable the vehicle wash mode; and enabling the vehicle wash mode according to the user instruction.

Specifically, when the preset condition is met, the prompt message may be first controlled to be generated, and then the prompt message is output to the user by using a prompt apparatus (correspondingly, the user may obtain the prompt message by using the prompt apparatus). The prompt apparatus may be a vehicle-mounted display, for example, the vehicle-mounted display displays the prompt message for the user. The prompt apparatus may alternatively be a vehicle-mounted speaker, for example, the speaker plays the prompt message for the user. The prompt apparatus may alternatively be another terminal device carried by the user or loaded on the vehicle, for example, the terminal device displays or plays the prompt message for the user.

It should be understood that, when the vehicle wash mode is enabled, the vehicle may automatically adjust components such as a door window, a front trunk, a charge port cover, a fuel filler cap, a sunroof, a door handle, an air conditioner vent, a range extender, an automatic wiper, a remote lock, a sentry mode, a headlight, a vehicle gear shifter, and a rear view mirror to a state suitable for a vehicle wash, to ensure normal running of a vehicle wash process. However, in practice, the user may forget to enable the vehicle wash mode before washing the vehicle, causing damage to the vehicle in the vehicle wash process.

Based on this embodiment of this application, when the vehicle is located in the vehicle wash shop and is in the parked state, the user may be prompted in a timely manner to enable the vehicle wash mode, to avoid damage to the vehicle because the user forgets to enable the vehicle wash mode before washing the vehicle. This can effectively improves user experience. In addition, when the vehicle is located in the vehicle wash shop and is in the parked state, the user is prompted to enable the vehicle wash mode, to avoid impact on normal traveling of the vehicle because the user enables the vehicle wash mode during vehicle traveling.

In a possible design, when the preset condition is met, the user may not be prompted to enable the vehicle wash mode, but the vehicle is directly controlled to intelligently enable the vehicle wash mode, to improve user experience.

In a possible design, that a vehicle is located in a vehicle wash shop and is in a parked state includes at least one of the following: A navigation destination of the vehicle is the vehicle wash shop, and the vehicle arrives at the destination and is parked; the vehicle travels to a place at which the user previously enables the vehicle wash mode, and is parked; and the vehicle perceives that a current parking location of the vehicle is the vehicle wash shop.

That the navigation destination of the vehicle is the vehicle wash shop may be that a destination input by the user during route navigation is the vehicle wash shop, or may be that the user selects the vehicle wash shop through surrounding search. This is not limited.

That a vehicle is located in a vehicle wash shop and is in a parked state includes that the vehicle travels to a place at which the user previously enables the vehicle wash mode, and is parked, and in this case, the place may be recorded each time the vehicle wash mode is enabled.

In addition, compared with a manner of navigation and positioning that is used to determine whether to arrive at the vehicle wash shop, a perception manner can ensure accuracy of a parking location. For example, when the vehicle wash shop is located in a non-ground scenario (for example, an underground scenario or a high-rise floor scenario) or a scenario with a complex road (for example, a lane with complex road planning), whether the vehicle is located in the vehicle wash shop may not be accurately determined in the manner of navigation or positioning, but can be accurately determined in the perception manner.

In a possible design, the method further includes: controlling to release and forbid a Bluetooth connection between the vehicle and a terminal device carried by the user.

Specifically, after the vehicle wash mode is enabled according to the user instruction, the Bluetooth connection between the vehicle and the terminal device carried by the user may be controlled to be released and forbidden.

In this application, a control operation may be understood as generating and sending a control instruction to an execution device, and then executing the control instruction by using the execution device. For example, a control instruction is first generated, where the control instruction instructs to release and forbid the Bluetooth connection between the vehicle and the terminal device carried by the user; the control instruction is sent to the execution device; and then the execution device performs an operation of releasing and forbidding the Bluetooth connection between the vehicle and the terminal device carried by the user. It should be understood that, for the control operation in this application, reference may be made to the description. Details are not described below.

The terminal device carried by the user may be, for example, an electronic device like a mobile phone, a tablet computer, or a wearable device. The mobile phone is used as an example. Generally, after a Bluetooth connection is established between the mobile phone of the user and the vehicle, an incoming call prompt tone on the mobile phone is played on the vehicle. However, in the vehicle wash process, the user may not be in the vehicle. If Bluetooth is still connected, the user cannot receive an incoming call, resulting in poor user experience.

In this embodiment of this application, after the vehicle wash mode is enabled according to the user instruction, the Bluetooth connection between the vehicle and the terminal device carried by the user may be controlled to be released and forbidden. In this way, after the vehicle wash mode is entered, and in the vehicle wash process, a prompt tone and the like on the terminal device of the user are not automatically switched to the vehicle. This can improve user experience.

In a possible design, the method further includes: controlling to stop and forbid remote control on the vehicle.

Specifically, after the vehicle wash mode is enabled according to the user instruction, the remote control on the vehicle by a website or the terminal device carried by the user may be controlled to be stopped and forbidden.

In a conventional solution, a user may remotely control a vehicle after leaving the vehicle. However, in a vehicle wash process, if the user remotely controls the vehicle, water may enter the vehicle or normal vehicle wash may be affected. For example, in the vehicle wash process, if the user remotely controls to open a window after leaving the vehicle, water enters the vehicle; or if the user remotely controls to turn on an air conditioner after leaving the vehicle, a sound of a machine may scare a vehicle wash person.

In this embodiment of this application, after the vehicle wash mode is enabled according to the user instruction, the remote control on the vehicle may be controlled to be stopped and forbidden, to prevent the remote control operation from affecting the vehicle wash process, causing water to enter the vehicle, or the like.

In a possible design, after the enabling the vehicle wash mode according to the user instruction, the method further includes: controlling to display an adjustment status of a component of the vehicle, where a first indicator is displayed for a component in an adjusted state, a second indicator is displayed for a component in a to-be-adjusted state, and a third indicator is displayed for a component in an adjustment failed state.

Specifically, the control instruction may be first generated, the control instruction is sent to a display apparatus, and then the display apparatus presents an adjustment status of each component to the user. The display apparatus may be the vehicle-mounted display, or may be another terminal device carried by the user or loaded on the vehicle. This is not limited.

For example, the first indicator, the second indicator, and the third indicator may be different indicator symbols. For example, the first indicator, the second indicator, and the third indicator are respectively "√", "∘ (dynamic rotation)", and "×", where the dynamic rotation represents the to-be-adjusted state or adjustment in progress. Specific presentation forms of the first indicator, the second indicator, and the third indicator are not limited in this embodiment of this application. All forms that can be used to distinguish different adjustment statuses may be understood as different indicators.

In this embodiment of this application, after the vehicle wash mode is enabled according to the user instruction, the adjustment status of each component may be displayed for the user, and different indicators may be displayed for different adjustment statuses, so that the user can intuitively learn of the adjustment status of each component. This improves user experience.

In a possible design, the user may be notified of the adjustment status of each component in another interaction manner, for example, may be notified in a voice broadcast manner. This is not limited in this application.

In a possible design, the controlling to display an adjustment status of a component of the vehicle includes: controlling to display a fourth indicator for a component whose state is automatically recovered after the vehicle wash mode is exited.

For example, the fourth indicator may be a specific indicator symbol, for example, the component whose state is automatically recovered after the vehicle wash mode is exited is marked as "☆". The fourth indicator may alternatively be a specific text, for example, the component whose state is automatically recovered after the vehicle wash mode is exited is marked as "Temporarily disable/turn off". This is not limited.

In this embodiment of this application, after the vehicle wash mode is enabled according to the user instruction, the fourth indicator may be controlled to be displayed for the component whose state is automatically recovered after the vehicle wash mode is exited, so that the user can intuitively learn of the status of each component after the vehicle wash mode is exited.

In a possible design, the user may be prompted, in another interaction manner, with the component whose state is automatically recovered after the vehicle wash mode is exited, for example, may be prompted in a voice broadcast manner. This is not limited in this application.

In a possible design, after the enabling the vehicle wash mode according to the user instruction, the method further includes: controlling to display exit condition information of the vehicle wash mode, where the exit condition information indicates to exit the vehicle wash mode when a speed is greater than or equal to a preset value.

In a conventional solution, after a vehicle wash mode is entered, a user is usually not explicitly prompted with a speed of exiting the vehicle wash mode, resulting in poor user experience. However, in this embodiment of this application, after the vehicle wash mode is enabled according to the user instruction, display of exiting the vehicle wash mode when the speed is greater than or equal to the preset value may be controlled, so that the user can more intuitively learn of an exit condition of the vehicle wash mode. This can improve user experience.

In a possible design, the vehicle wash mode includes a first vehicle wash submode and a second vehicle wash submode, the first vehicle wash submode is used in a first vehicle wash scenario, and the second vehicle wash submode is used in a second vehicle wash scenario. The receiving a user instruction includes: receiving a first instruction of the user; controlling, in response to the first instruction of the user, to display the first vehicle wash submode and the second vehicle wash submode; receiving a second instruction of the user; controlling, in response to the second instruction of the user, to select the first vehicle wash submode or the second vehicle wash submode; and receiving a third instruction of the user. The enabling the vehicle wash mode according to the user instruction includes: controlling, in response to the third instruction of the user, to enable the first vehicle wash submode or the second vehicle wash submode.

For example, the first vehicle wash scenario may be a manual vehicle wash scenario or another non-conveyor vehicle wash scenario, and the second vehicle wash scenario may be a conveyor vehicle wash scenario. Based on this example, when the user needs to wash the vehicle through a conveyor, the user may select the second vehicle wash submode; and when the user needs to wash the vehicle manually or without using the conveyor, the user may select the first vehicle wash submode.

In this embodiment of this application, the vehicle wash mode may be further divided into the first vehicle wash submode and the second vehicle wash submode, so that the user can select different vehicle wash modes based on an actual vehicle wash scenario. This can improve user experience.

It should be understood that, in an actual operation, the vehicle wash mode may be further divided into more vehicle wash submodes, and different vehicle wash submodes are applicable to different vehicle wash scenarios. This is not limited.

In a possible design, the method further includes: controlling to display a vehicle movement key, where the vehicle movement key is used to obtain vehicle movement authorization for a preset quantity of times (for example, once or twice) or first preset duration (for example, 5 minutes or 10 minutes).

In this embodiment of this application, after the vehicle wash mode is enabled, displaying of the vehicle movement key may be controlled, so that after the user leaves the vehicle, the vehicle wash person may drive the vehicle from parking space to washing space based on the vehicle movement key to wash the vehicle, and then drive the vehicle back to the parking space after the vehicle wash is completed.

In a possible design, the method further includes: controlling to limit a traveling speed of the vehicle.

In this embodiment of this application, the traveling speed of the vehicle may be controlled to be limited after the vehicle wash mode is enabled. In this way, it can be avoided that the vehicle wash mode is automatically exited when the speed is excessively high. In addition, when the user leaves the vehicle, the user can easily track the vehicle when the vehicle is stolen.

In a possible design, the method further includes: controlling to display and lock an interface of the vehicle wash mode.

In this embodiment of this application, after the vehicle wash mode is enabled, displaying and locking of the interface of the vehicle wash mode may be controlled, to avoid user privacy leakage because the vehicle wash person switches the interface of the vehicle wash mode to another interface to perform an operation (for example, viewing or modifying a vehicle configuration) after the user leaves the vehicle.

Optionally, after the interface of the vehicle wash mode is locked, a locked state may be exited by entering a password.

Optionally, the locked interface of the vehicle wash mode may take up a whole screen.

Optionally, when the vehicle wash mode includes a vehicle wash submode, an interface of the vehicle wash submode that is finally selected by the user may be controlled and locked.

In a possible design, the method further includes: controlling to lock a glove box to be incapable of mechanical opening.

In this embodiment of this application, in a vehicle wash scenario presented when the user leaves the vehicle (for example, the manual vehicle wash scenario), after the vehicle wash mode is enabled, the glove box may be controlled to be locked, to prevent the vehicle wash person from viewing a valuable or private item in the glove box.

In a possible design, when a vehicle wash scenario is a conveyor vehicle wash, the method further includes: controlling to disable an automatic vehicle hold (automatic vehicle hold, AVH) function of the vehicle.

In this embodiment of this application, when the vehicle wash scenario is the conveyor vehicle wash, the AVH function of the vehicle may be controlled to be disabled, to prevent the vehicle from being lock due to an AVH hydraulic pressure.

In an implementation, when the vehicle wash scenario is the conveyor vehicle wash, after the vehicle wash mode is enabled, the AVH function may be automatically disabled.

In another implementation, when the vehicle wash scenario is the conveyor vehicle wash, before the vehicle wash mode is enabled, the user may be prompted to first shift the vehicle to a P gear (it should be understood that after the vehicle is shifted to the P gear, the AVH function is triggered to be disabled); and after the vehicle wash mode is enabled, the vehicle is controlled to be shifted to an N gear.

In a possible design, the method further includes: when the speed of the vehicle is greater than or equal to a first preset value, controlling to turn on a light of the vehicle; or when the speed of the vehicle is less than or equal to a second preset value and holding duration is greater than or equal to second preset duration, controlling to turn off a light of the vehicle.

The first preset value and the second preset value may be the same. For example, the first preset value and the second preset value may be 3 km/h or 4 km/h. Alternatively, the first preset value and the second preset value may be different. For example, the first preset value is 4 km/h, and the second preset value is 3 km/h. The second preset duration may be, for example, 10s or 15s.

In this embodiment of this application, after the vehicle wash mode is entered, the light may be controlled to be turned on or off based on an actual situation. For example, when the speed is greater than or equal to the first preset value, it indicates that the vehicle may be moving. Therefore, the light may be controlled to be turned on, to meet a vehicle movement requirement in a vehicle wash shop. For another example, when the speed is less than or equal to the second preset value and holds for a period of time, it indicates that the vehicle may be in a vehicle wash state, and the light may be controlled to be turned off, to avoid impact on the vehicle wash process.

In a possible design, the method further includes: when a state of charge of the vehicle is less than or equal to a third preset value, controlling to turn off a vehicle-mounted air conditioner. The third preset value may be, for example, 5%, 8%, or 10%.

In this embodiment of this application, when the state of charge of the vehicle is less than or equal to the third preset value, the vehicle-mounted air conditioner may be controlled to be turned off, to avoid exhaustion of the state of charge. In addition, after the vehicle-mounted air conditioner is turned off, the user may also manually turn on the air conditioner, which is not limited.

In addition, it should be further noted that, generally, after leaving the vehicle, the user may remotely enable the vehicle wash mode by using a carried terminal device. Furthermore, to help a vehicle wash person clean the vehicle, the vehicle is automatically unlocked when the vehicle wash mode is remotely enabled. In this case, it is easy to cause loss of an item of the user in the vehicle or leakage of vehicle information.

In view of this, this embodiment of this application further proposes that when the user remotely enables the vehicle wash mode, the user is prompted that the vehicle is automatically unlocked after the vehicle wash mode is enabled, so that the user can re-determine, based on a security degree of an environment in which the vehicle is located, whether to enable the vehicle wash mode, to avoid loss of the item in the vehicle or leakage of the vehicle information.

According to a fifth aspect, an embodiment of this application further provides a control apparatus, including a controller and a memory. The memory is configured to store a program. The controller is configured to execute the program stored in the memory, so that the apparatus implements the method according to the fourth aspect and any one of the possible designs of the fourth aspect.

According to a sixth aspect, an embodiment of this application further provides a vehicle control apparatus, including a control module and a transceiver module. When a preset condition is met, the control module is configured to control to generate a prompt message, where the prompt message is used to prompt a user to enable a vehicle wash mode, and the preset condition includes that a vehicle is located in a vehicle wash shop and is in a parked state. The transceiver module is configured to control to receive a user instruction, where the user instruction instructs to enable the vehicle wash mode. The control module is further configured to control, according to the user instruction, to enable the vehicle wash mode.

In a possible design, that a vehicle is located in a vehicle wash shop and is in a parked state includes at least one of the following: A navigation destination of the vehicle is the vehicle wash shop, and the vehicle arrives at the destination and is parked; the vehicle travels to a place at which the user previously enables the vehicle wash mode, and is parked; and the vehicle perceives that a current parking location of the vehicle is the vehicle wash shop.

In a possible design, the control module is further configured to control to release and forbid a Bluetooth connection between the vehicle and a terminal device carried by the user.

In a possible design, the control module is further configured to control to stop and forbid remote control on the vehicle.

In a possible design, after controlling, according to the user instruction, to enable the vehicle wash mode, the control module is further configured to control to display an adjustment status of a component of the vehicle, where a first indicator is displayed for a component in an adjusted state, a second indicator is displayed for a component in a to-be-adjusted state, and a third indicator is displayed for a component in an adjustment failed state.

In a possible design, the control module is further configured to control to display a fourth indicator for a component whose state is automatically recovered after the vehicle wash mode is exited.

In a possible design, after controlling, according to the user instruction, to enable the vehicle wash mode, the control module is further configured to control to display exit condition information of the vehicle wash mode, where the exit condition information indicates to exit the vehicle wash mode when a speed is greater than or equal to a preset value.

In a possible design, the vehicle wash mode includes a first vehicle wash submode and a second vehicle wash submode, the first vehicle wash submode is used in a first vehicle wash scenario, and the second vehicle wash submode is used in a second vehicle wash scenario. The transceiver module is further configured to receive a first instruction of the user. The control module is further configured to control, in response to the first instruction of the user, to display the first vehicle wash submode and the second vehicle wash submode. The transceiver module is further configured to receive a second instruction of the user. The control module is further configured to control, in response to the second instruction of the user, to select the first vehicle wash submode or the second vehicle wash submode. The transceiver module is further configured to receive a third instruction of the user. The control module is further configured to control, in response to the third instruction of the user, to enable the first vehicle wash submode or the second vehicle wash submode.

In a possible design, the control module is further configured to control to display a vehicle movement key, where the vehicle movement key is used to obtain vehicle movement authorization for a preset quantity of times or first preset duration.

In a possible design, the control module is further configured to control to limit a traveling speed of the vehicle.

In a possible design, the control module is further configured to control to display and lock the interface of the vehicle wash mode.

In a possible design, the control module is further configured to control to lock a glove box to be incapable of mechanical opening.

In a possible design, when a vehicle wash scenario is a conveyor vehicle wash, the control module is further configured to control to disable an AVH function of the vehicle.

In a possible design, the control module is further configured to: when the speed of the vehicle is greater than or equal to a first preset value, control to turn on a light of the vehicle; or when the speed of the vehicle is less than or equal to a second preset value and holding duration is greater than or equal to second preset duration, control to turn off a light of the vehicle.

In a possible design, the control module is further configured to: when a state of charge of the vehicle is less than or equal to a third preset value, control to turn off a vehicle-mounted air conditioner.

According to a seventh aspect, an embodiment of this application further provides a vehicle. The vehicle includes the apparatus according to the second aspect or the third aspect and any one of the possible designs of the third aspect, and/or the apparatus according to the fifth aspect or the sixth aspect and any one of the possible designs of the sixth aspect.

According to an eighth aspect, an embodiment of this application further provides a computing device, including a processor. The processor is connected to a memory, the memory stores a computer program or instructions, and the processor is configured to execute the computer program or the instructions stored in the memory, so that the computing device performs the method according to the first aspect and any one of the possible designs of the first aspect, and/or the method according to the fourth aspect and any one of the possible designs of the fourth aspect.

According to a ninth aspect, an embodiment of this application further provides a computer-readable storage medium. The computer-readable storage medium stores a computer program or instructions. When the computer program or the instructions is/are executed, a computer is enabled to perform the method according to the first aspect and any one of the possible designs of the first aspect, and/or the method according to the fourth aspect and any one of the possible designs of the fourth aspect.

According to a tenth aspect, an embodiment of this application further provides a computer program product. When a computer executes the computer program product, the computer is enabled to perform the method according to the first aspect and any one of the possible designs of the first aspect, and/or the method according to the fourth aspect and any one of the possible designs of the fourth aspect.

According to an eleventh aspect, an embodiment of this application further provides a chip. The chip is connected to a memory, and is configured to read and execute a computer program or instructions stored in the memory, to implement the method according to the first aspect and any one of the possible designs of the first aspect, and/or the method according to the fourth aspect and any one of the possible designs of the fourth aspect.

For beneficial effects of the second aspect, the third aspect, and the fifth aspect to the eleventh aspect, refer to corresponding descriptions in the first aspect and the fourth aspect. Details are not described herein again.

### BRIEF DESCRIPTION OF DRAWINGS

FIG. 1A is an example of a diagram of an architecture of a possible system to which an embodiment of this application is applicable;
FIG. 1B is an example of a diagram of an architecture of another possible system to which an embodiment of this application is applicable;
FIG. 2 is an example of a schematic flowchart of a vehicle control method according to an embodiment of this application;
FIG. 3A is an example of a diagram 1 of a user operation interface according to an embodiment of this application;
FIG. 3B is an example of a diagram 2 of a user operation interface according to an embodiment of this application;
FIG. 3C is an example of a diagram 3 of a user operation interface according to an embodiment of this application;
FIG. 3D is an example of a diagram 4 of a user operation interface according to an embodiment of this application;
FIG. 3E is an example of a diagram 5 of a user operation interface according to an embodiment of this application;
FIG. 3F is an example of a diagram 6 of a user operation interface according to an embodiment of this application;
FIG. 3G is an example of a diagram 7 of a user operation interface according to an embodiment of this application;
FIG. 3H is an example of a diagram 8 of a user operation interface according to an embodiment of this application;
FIG. 3I is an example of a diagram 9 of a user operation interface according to an embodiment of this application;
FIG. 3J-1 to FIG. 3J-3 are an example of a diagram 10 of a user operation interface according to an embodiment of this application;
FIG. 3K-1 to FIG. 3K-3 are an example of a diagram 11 of a user operation interface according to an embodiment of this application;

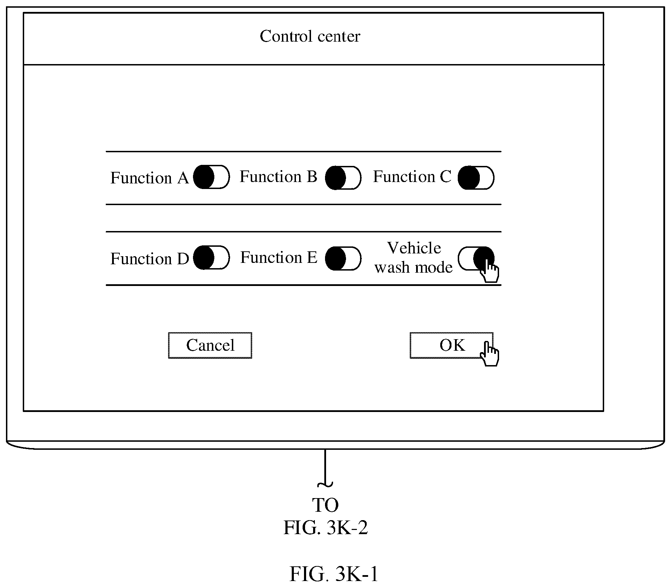

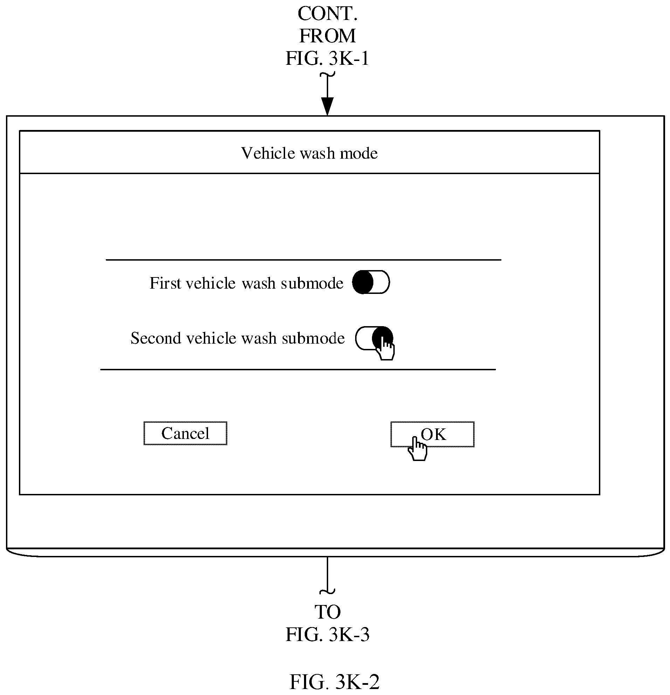

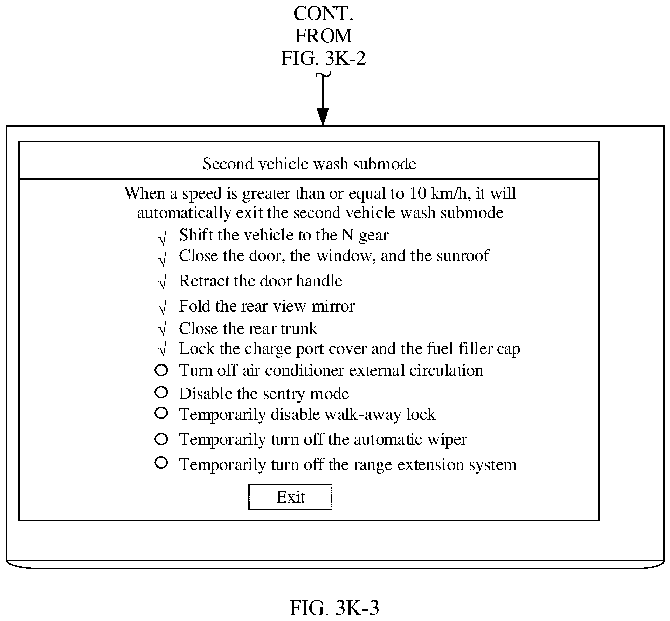

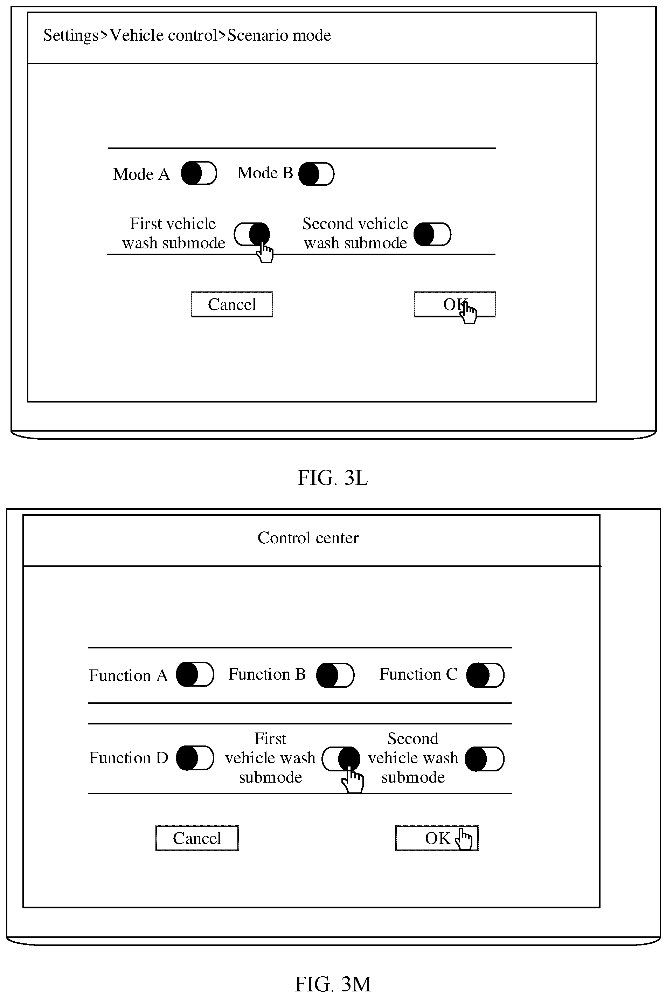

FIG. 3L is an example of a diagram 12 of a user operation interface according to an embodiment of this application;
FIG. 3M is an example of a diagram 13 of a user operation interface according to an embodiment of this application;

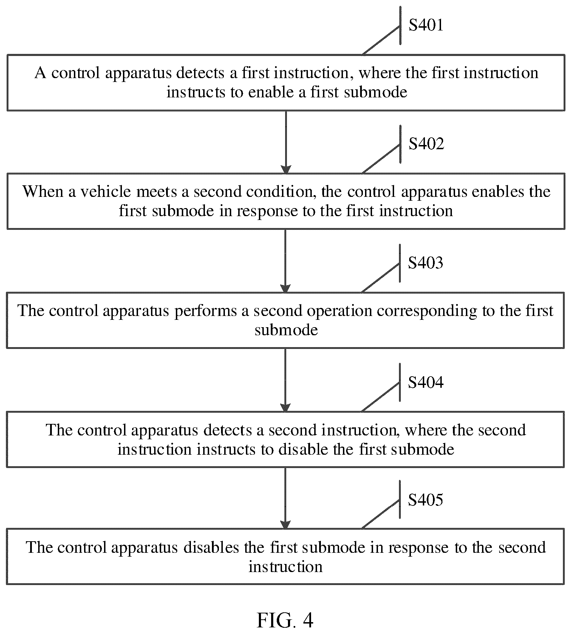

FIG. 4 is an example of a schematic flowchart of another vehicle control method according to an embodiment of this application;

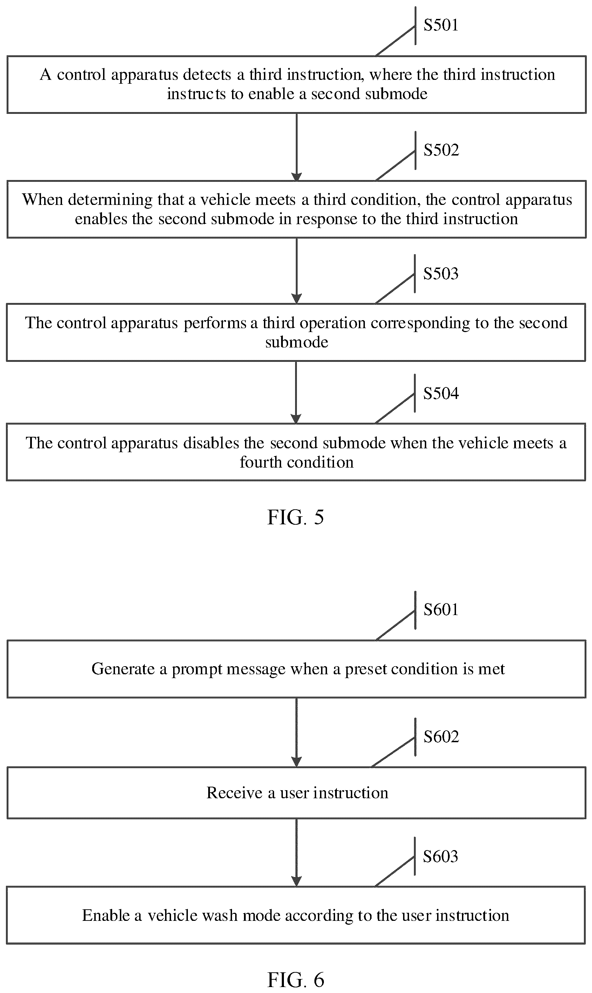

FIG. 5 is an example of a schematic flowchart of still another vehicle control method according to an embodiment of this application;
FIG. 6 is an example of a schematic flowchart of yet another vehicle control method according to an embodiment of this application;

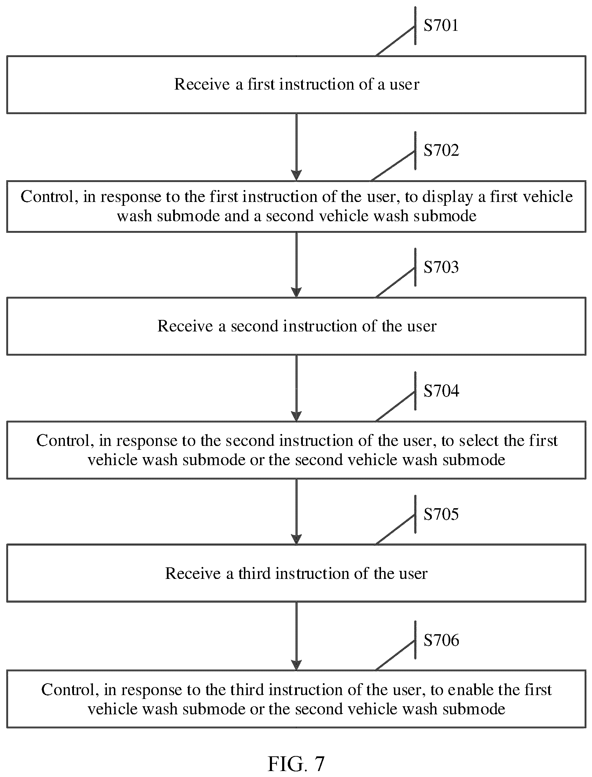

FIG. 7 is an example of a schematic flowchart of still yet another vehicle control method according to an embodiment of this application;

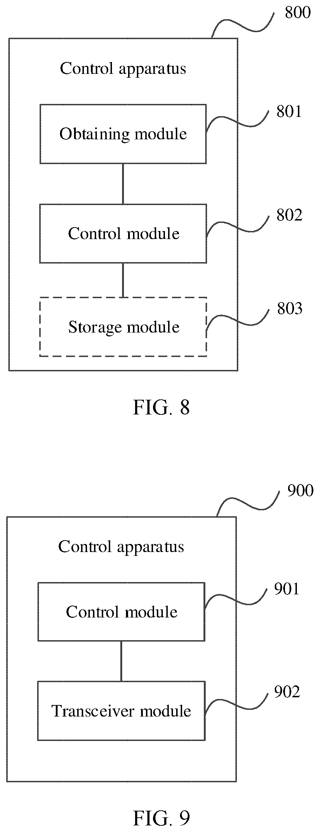

FIG. 8 is an example of a diagram of a structure of a control apparatus according to an embodiment this application;
FIG. 9 is an example of a diagram of another structure of a control apparatus according to an embodiment this application; and

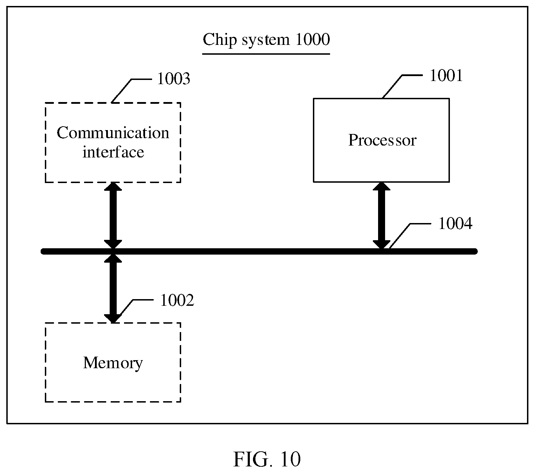

FIG. 10 is an example of a diagram of a structure of a chip system according to an embodiment of this application.

### DESCRIPTION OF EMBODIMENTS

Embodiments of this application provide a vehicle control method, an apparatus, and a vehicle, and relate to the field of intelligent control technologies, to flexibly control a vehicle-mounted component in a vehicle wash scenario, so that a status of the vehicle-mounted component meets a requirement of the vehicle wash scenario, and then a vehicle wash operation is normally performed. This effectively improves user experience and security. The method includes: when a vehicle wash mode of a vehicle is enabled, obtaining a first parameter of the vehicle, where the first parameter includes a speed and/or a gear; and when the first parameter meets a first condition, performing a first operation corresponding to the vehicle wash mode, where the first operation includes disabling an automatic power-on function of the vehicle. In embodiments of this application, the automatic power-on function is to control the vehicle to be powered on when it is detected that a door is opened or the vehicle is unlocked. Therefore, disabling the automatic power-on function can prevent the vehicle from being frequently powered on due to frequent opening or closing of the door in the vehicle wash scenario, and a vehicle wash operation can be normally performed. This effectively improves user experience.

The vehicle control method provided in embodiments of this application may be performed by a control apparatus. The control apparatus may be abstracted as a computer system. The control apparatus may be an entire system, or may be a part of components in an entire system, for example, a system chip or a processing chip. Specifically, the control apparatus may be a terminal apparatus or a vehicle-mounted device like a vehicle-mounted computing platform, a vehicle-mounted controller, or a head unit in a vehicle, or may be a system chip, a decision-making processing chip, or another type of chip that can be disposed in the computer system of the vehicle or the vehicle-mounted device. It may be understood that the method and the apparatus are based on a same technical concept. Because problem-resolving principles of the method and the apparatus are similar, for implementation of the apparatus and the method, refer to each other. Repeated parts are not described.

First, some terms in embodiments of this application are explained and described, to facilitate understanding of a person skilled in the art.
(1) An in-vehicle infotainment (in-vehicle infotainment, IVI) system is a vehicle-mounted integrated information processing system based on a body bus system and internet services. The IVI system may implement one or more applications of information display (for example, displaying navigation information, a real-time road condition, or a vehicle status), human-computer interaction, assisted driving, fault detection, body control, wireless communication, or online entertainment, to improve an electronic, networking, and intelligence level of a vehicle. In embodiments of this application, the IVI system may provide an operation interface corresponding to a vehicle wash mode, so that a user performs corresponding control and setting on the vehicle wash mode.
(2) An automatic power-on function is a power-on mechanism of a vehicle. To be specific, when detecting that a door is opened or the vehicle is unlocked, a control apparatus controls the vehicle to be powered on.
(3) An automatic vehicle locking function is a vehicle locking mechanism of a vehicle. To be specific, when detecting that a user leaves the vehicle or a door is closed, a control apparatus controls the vehicle to be locked.
(4) A warning function may also be referred to as, in a possible implementation, a "sentry mode", and is a security monitoring mechanism of a vehicle. To be specific, when detecting an emergency, a control apparatus controls a prompt apparatus to output corresponding warning prompt information. For example, when detecting that a stranger touches the vehicle, the control apparatus may control the prompt apparatus to output a corresponding prompt tone.
(5) A remote control function is a controlled mode of a vehicle. In this controlled mode, a user terminal can remotely control a status of a vehicle-mounted component.
(6) Parking (parking, P) gear: When a gear of a vehicle is the P gear, a speed of the vehicle is 0. In this case, the vehicle can be parked to prevent movement. In embodiments of this application, when a vehicle wash operation is performed in a scenario in which the inside of the vehicle is cleaned, the gear of the vehicle needs to be adjusted to the P gear, to prevent the vehicle from moving. This improves security of the vehicle wash operation.
(7) Neutral (neutral, N) gear: When a gear of a vehicle is the N gear, the power of the vehicle is not interrupted, a speed of the vehicle is not 0, and the vehicle can travel slowly. In embodiments of this application, in a scenario in which the vehicle is moved to a vehicle wash room, the gear of the vehicle needs to be adjusted to the N gear, to prevent an electrical park brake (electrical park brake, EPB) from being damaged by a conveyor.
(8) A drive (drive, D) gear is also referred to as a forward gear. When a gear of a vehicle is the D gear, the vehicle is in a driving state.
(9) That a vehicle is powered off may be understood as that all circuits in the vehicle are turned off. In other words, a power supply device of the vehicle stops supplying power to the vehicle. When the vehicle is powered off, all components of the vehicle are not energized.
(10) In embodiments of this application, "at least one" means one or more, and "at least two" means two or more. The term "and/or" describes an association relationship between associated objects and may indicate three relationships. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, and c may represent: a, b, c, a and b, a and c, b and c, or a, b and c, where a, b, and c may be singular or plural. Furthermore, it should be understood that in the descriptions of this application, the terms such as "first" and "second" are merely used for distinguishing and description, but should not be understood as indicating or implying relative importance, or should not be understood as a limitation on a sequence.

With reference to the accompanying drawings, the following describes an architecture of a system to which embodiments of this application are applicable.

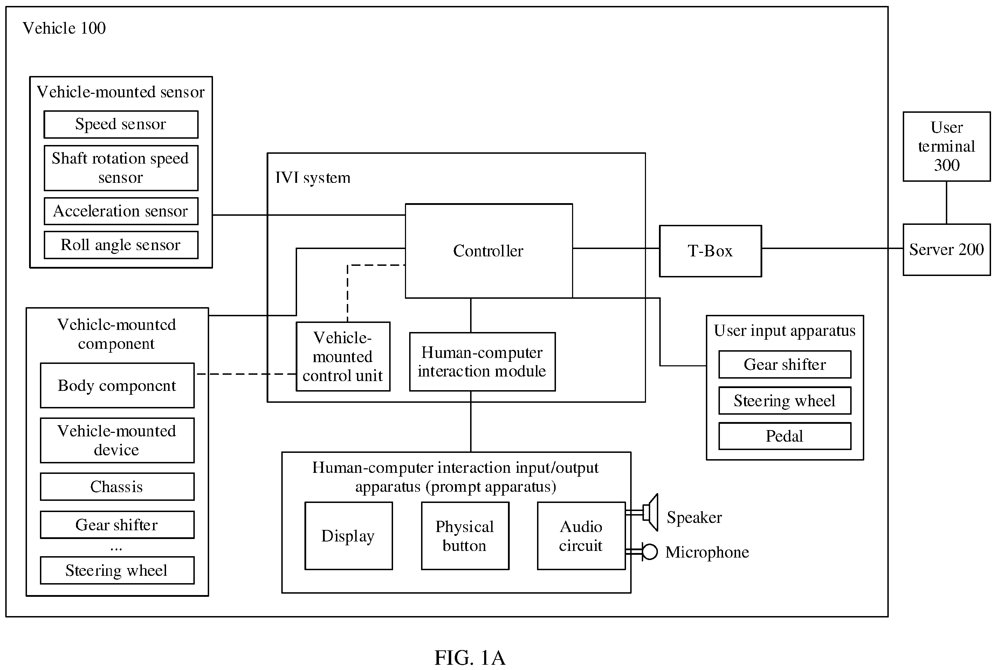

FIG. 1A is an example of a diagram of an architecture of a possible system to which an embodiment of this application is applicable. The system includes a vehicle 100, a server 200, and a user terminal 300.

The vehicle 100 may include an IVI system, a vehicle-mounted sensor, a user input apparatus, a vehicle-mounted component, a human-computer interaction input/output apparatus, and the like. The following describes the components in the vehicle 100.

The IVI system may include a controller and a human-computer interaction module. As a control center of the vehicle, the controller may be connected to another component through various interfaces and lines, and perform various functions of the IVI system by running or executing a software program and/or a module stored in a memory and invoking data stored in the memory. A human-computer interaction module is connected to the human-computer interaction input/output apparatus of the vehicle, and is configured to perform communication interaction with the human-computer interaction input/output apparatus. Specifically, the human-computer interaction module receives an instruction input by the human-computer interaction input/output apparatus, and feeds back an operation corresponding to the instruction to the controller; and the human-computer interaction module receives an interaction command output by the controller, sends the interaction command to the human-computer interaction input/output apparatus, and displays or indicates the interaction command to a user by using a display, an audio circuit, or the like. For example, in this embodiment of this application, the controller may send an instruction to the human-computer interaction module, and the human-computer interaction module may forward the instruction to the human-computer interaction input/output apparatus, so that the human-computer interaction input/output apparatus displays an operation interface of a first mode, for the user to perform corresponding setting on the first mode. The first mode may be a vehicle wash mode, and the vehicle wash mode may be a first vehicle wash submode or a second vehicle wash submode. In some possible embodiments, the IVI system further includes a vehicle-mounted control unit. The vehicle-mounted control unit may receive a control instruction from the controller, and correspondingly adjust a status of the vehicle-mounted component according to the control instruction.

The vehicle-mounted sensor is configured to collect various parameters of the vehicle 100 in real time. As shown in FIG. 1A, the vehicle-mounted sensor may be, for example, at least one of a speed sensor, a shaft rotation speed sensor, a wheel speed sensor, an acceleration sensor, or a roll angle sensor. The speed sensor can measure a speed of the vehicle 100 in a specified direction. The shaft rotation speed sensor can measure a rotation speed of a motor shaft. The wheel speed sensor can measure a rotation speed of a wheel of the vehicle 100. The acceleration sensor can measure an acceleration of the vehicle 100 in a specified direction. The roll angle sensor can measure a roll angle of the vehicle 100. In this embodiment of this application, the speed sensor may measure a speed of the vehicle 100, and report the speed to the controller in the IVI system.

The user input apparatus is operated by the user when the vehicle 100 is in the first mode, and may specifically include at least one of a steering wheel, a throttle pedal and a brake pedal, a manual gear shifter lever, or an automatic gear shifter controller. In some embodiments of this application, when the vehicle enables the first mode, the user may generate, by rotating the steering wheel, a power-off signal used to control the vehicle to be powered off. In some embodiments of this application, when the vehicle enables the first mode, the user may generate, by operating the brake pedal, a power-on signal used to control the vehicle to be powered on. In addition, in some embodiments of this application, when the vehicle enables the first mode, the user may generate a gear shifter switching signal of the vehicle by operating the manual gear shifter lever or the automatic gear shifter controller.

The human-computer interaction input/output apparatus may also be referred to as a prompt apparatus, and is configured to implement interaction and communication between the user and the vehicle that can be mutually understood and recognized, and implement human-computer interaction. As shown in FIG. 1A, the human-computer interaction input/output apparatus may include but is not limited to the display, a physical button, an audio circuit, and the like. The display may be a touch display. The display cannot only present content like a user interface or a multimedia file play interface, but also can collect a touch operation performed by the user on or near the display, generate corresponding touch information, and send the touch information to the human-computer interaction module in the IVI system, so that the controller in the IVI system executes an instruction corresponding to the touch information. For example, when the vehicle is in a vehicle wash scenario, the human-computer interaction module in the IVI system may control the display to display menu information corresponding to the first mode, so that the user can perform corresponding setting on the first mode.

The physical button may collect a button operation of the user, generate button information, and send the button information to the controller in the IVI system, so that the controller in the IVI system executes a command corresponding to the button information. For example, when the vehicle enables the first mode, if the controller in the IVI system receives a tap operation performed by the user on a power button, the controller may generate a vehicle power-on signal, and control, based on the power-on signal, the vehicle to be powered on.

The audio circuit is connected to a speaker and a microphone. The audio circuit may convert audio data received from a vehicle-mounted device into an electrical signal and transmit the electrical signal to the speaker, and the speaker converts the electrical signal into an audio signal (namely, a sound wave) for output. In addition, the microphone may convert a collected audio signal into an electrical signal, and the audio circuit receives the electrical signal and then converts the electrical signal into audio data for further processing such as transmission, analysis, or storage.

The speaker, also referred to as a "horn" or a "sound box", is configured to: convert an electrical signal that carries audio data into an audio signal, and output the audio signal. For example, the controller in the IVI system may control the speaker to play voice information such as music, broadcast, and various voice prompts. For example, in this embodiment of this application, after the vehicle exits the first mode, the controller in the IVI system may control the speaker to output corresponding prompt information, to guide the user to choose whether to re-enter the first mode. For another example, in this embodiment of this application, when the vehicle is located in a vehicle wash shop and is in a parked state, the controller in the IVI system may control the speaker to output a corresponding prompt message, to guide the user to enable the vehicle wash mode.

The microphone, also referred to as a "mike" or a "mic", is configured to: collect an audio signal (for example, a sound made by the user) in an environment around the vehicle, and convert the audio signal into an electrical signal that carries the audio signal. For example, in this embodiment of this application, the microphone may collect related audio signals of operations of enabling the first mode, disabling the first mode, or the like.

The vehicle-mounted component includes a body component and a vehicle-mounted device. The body component may include but is not limited to: a door, a window, a sunroof, a charge port cover, a fuel filler cap, a wiper, or a rear view mirror. The vehicle-mounted device includes but is not limited to an air conditioner, a sound box, a seat, or the like.

In some embodiments, the vehicle further includes a telematics box (telematics box, T-Box), and the vehicle 100 may communicate with the server 200 by using the T-Box. The user terminal 300 may receive a user instruction, generate a remote control instruction according to the user instruction, and send the remote control instruction to the server 200. Then, the server 200 sends the instruction to the T-Box, to implement remote control on a component in the vehicle.

A person skilled in the art may understand that the structure of the vehicle shown in FIG. 1A does not constitute a limitation on the vehicle 100. The vehicle 100 provided in this embodiment of this application may include more or fewer modules than those shown in the figure, or may combine some modules, or may have different component arrangements. For example, the vehicle 100 may further include a wireless communication module, a communication interface, and the like.

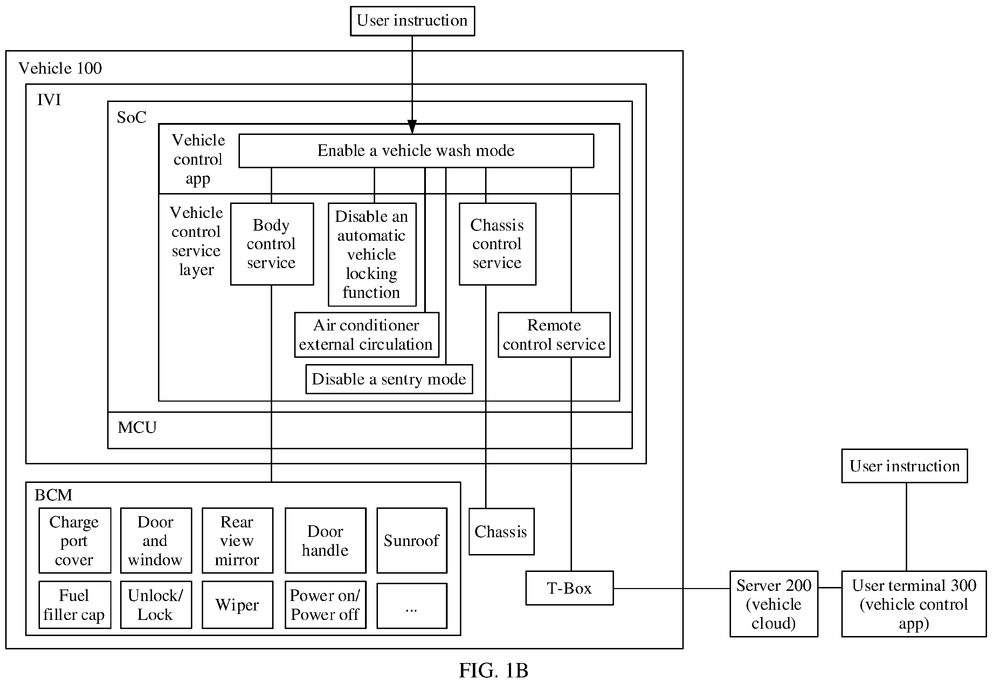

Optionally, the IVI system may further include a vehicle-mounted control unit. After generating a control instruction of the vehicle-mounted component, the controller may send the control instruction to the vehicle-mounted control unit, so that the vehicle-mounted control unit adjusts a status of the vehicle-mounted component according to the control instruction. As shown in FIG. 1B, in some possible embodiments, the controller may include a system on chip (system on a chip, SoC) and a micro control unit (micro control unit, MCU). The SoC may run a vehicle control application (application, APP). If the user enters a corresponding user instruction by using the vehicle control app, the SoC may enable the first mode in response to the user instruction, run a service (for example, a body control service, a chassis control service, disabling an automatic vehicle locking function, disabling a sentry mode, setting an air conditioner to external circulation, or a remote control service) corresponding to a vehicle control service layer, and generate a corresponding control instruction. In this way, the MCU may encapsulate the control instruction to form a corresponding controller area network (controller area network, CAN) signal or an Ethernet (Ethernet, ETH) signal, and send the CAN signal or the ETH signal to a corresponding vehicle-mounted control unit, so that the vehicle-mounted control unit adjusts the status of the vehicle-mounted component. For example, the vehicle-mounted control unit is a body control module (body control module, BCM). The SoC may send a body control instruction to the MCU. After encapsulating the body control instruction into a CAN signal, the MCU sends the CAN signal to the BCM, so that the BCM may adjust the status of the vehicle-mounted component. For example, the BCM may close a charge port cover, a fuel filler cap, a door, a window, a wiper, and a sunroof. For another example, the BCM may control the vehicle to be powered on or powered off, or to be unlocked or locked.

In some other possible embodiments, for example, the server 200 is a vehicle cloud. The user terminal 300 runs the vehicle control app. If the user enters a corresponding user instruction by using the vehicle control app, the user terminal 300 generates a corresponding remote control instruction in response to the user instruction, and uploads the remote control instruction to the vehicle cloud. The vehicle cloud sends the remote control instruction to the SoC by using the T-Box, so that the SoC runs a remote control service corresponding to the remote control instruction.

It should be noted that the vehicle control method provided in embodiments of this application is mainly applied to the vehicle wash scenario. In embodiments of this application, the vehicle wash scenario includes an in-vehicle wash scenario, an out-vehicle wash scenario, and a conveyor vehicle wash scenario. In the in-vehicle wash scenario, a vehicle-mounted component (for example, an inner side of a door, an inner side of a window, a seat, or a display) inside a vehicle needs to be cleaned. In the out-vehicle wash scenario, a vehicle-mounted component (for example, an outer side of a door, an outer side of a window, or a body) outside a vehicle needs to be cleaned. In the conveyor vehicle wash scenario, a vehicle needs to be moved to a specified location (for example, a vehicle wash location) by using a conveyor.

With reference to the specific accompanying drawings, the following describes the vehicle control method provided in embodiments of this application.

### Embodiment 1

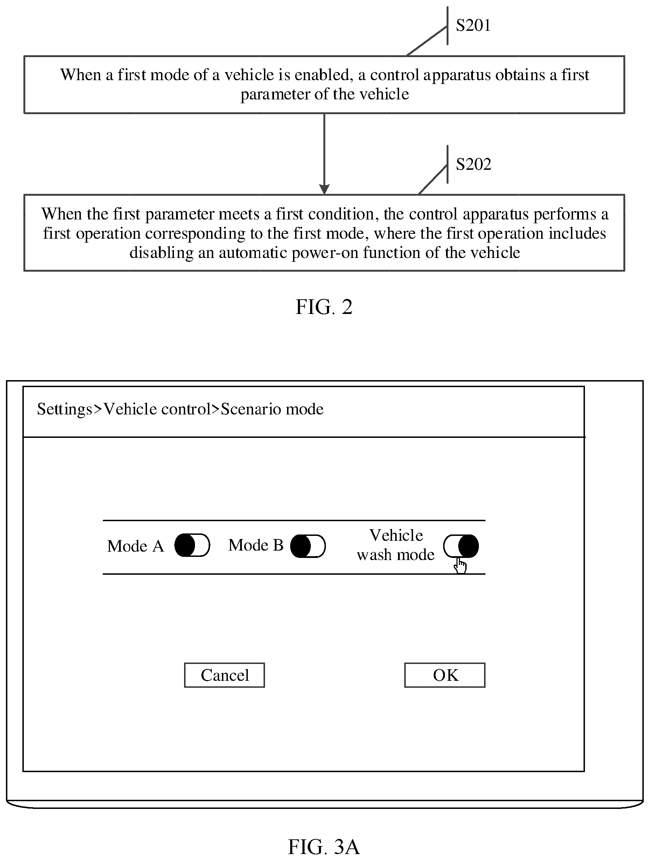

FIG. 2 is an example of a schematic flowchart of a vehicle control method according to an embodiment of this application. The method may be applied to a control apparatus (for example, the controller in the IVI system described above). The method includes the following steps.

S201: When a first mode of a vehicle is enabled, a control apparatus obtains a first parameter of the vehicle.

In this embodiment of this application, the first parameter may include a speed and/or a gear shifter. For example, the control apparatus may obtain the speed of the vehicle by using the foregoing speed sensor, and the control apparatus may detect the gear of the vehicle by using an automatic gear shifter controller.

In this embodiment of this application, in a possible implementation, the first mode may be a vehicle wash mode. In this way, when the vehicle wash mode of the vehicle is enabled, if the speed and/or the gear of the vehicle meet/meets a first condition, an automatic power-on function of the vehicle may be disabled. The automatic power-on function is a power-on mechanism of the vehicle. To be specific, when detecting that a door is opened or the vehicle is unlocked, the control apparatus controls the vehicle to be powered on. Therefore, the control apparatus disables the automatic power-on function of the vehicle, so that the vehicle can be prevented from being frequently powered on due to frequent opening of the door in the vehicle wash scenario, and a vehicle wash operation can be normally performed. This effectively improves vehicle wash experience of a user. In another possible implementation, the first mode may alternatively be another mode in which a problem similar to that in the vehicle wash scenario needs to be avoided, for example, may be a camping mode, or may be another user-defined mode.

In a possible implementation, the control apparatus may obtain an instruction 1, where the instruction 1 instructs to enable the first mode, so that the control apparatus may enable the first mode of the vehicle in response to the instruction 1. The instruction 1 may be a human-computer interaction instruction or a remote control instruction, and the human-computer interaction instruction may be any one of a voice instruction, a gesture instruction, or a text instruction. This is not specifically limited in this embodiment of this application. In this way, the control apparatus provides a plurality of manners of flexibly controlling enabling of the first mode of the vehicle, to help the user control the first mode. This effectively improves user experience.

Example 1: For example, the first mode is the vehicle wash mode. FIG. 3A is an example of a diagram 1 of a user operation interface according to an embodiment of this application. Menu buttons of a vehicle control app are displayed in the operation interface. If the user taps a menu "Settings>Vehicle control>Scenario mode" in the vehicle control app, operation buttons separately corresponding to a mode A, a mode B, and a vehicle wash mode are displayed in the operation interface. If the control apparatus detects a tap operation performed by the user on the "operation button for the vehicle wash mode" in the operation interface, the control apparatus converts the tap operation into the instruction 1, and enables the vehicle wash mode of the vehicle in response to the instruction 1.

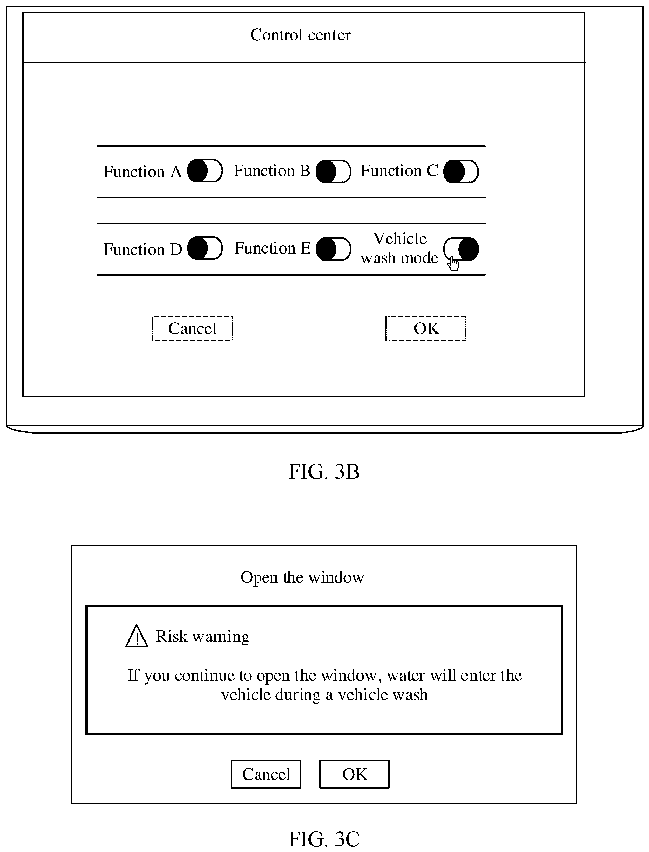

Example 2: For example, the first mode is the vehicle wash mode. FIG. 3B is an example of a diagram 2 of a user operation interface according to an embodiment of this application. Menu buttons of a vehicle control of the vehicle are displayed in the operation interface, and operation buttons separately corresponding to a function A, a function B, a function C, a function D, a function E, and a vehicle wash mode are displayed in the operation interface. If the control apparatus detects a tap operation performed by the user on the "operation button for the vehicle wash mode" in the operation interface, the control apparatus converts the tap operation into the instruction 1, and enables the vehicle wash mode of the vehicle in response to the instruction 1.

It may be understood that the user operation interfaces in Example 1 and Example 2 may be displayed on a vehicle-mounted display, or may be displayed on the display of the user terminal. This is not specifically limited in this embodiment of this application.

Example 3: For example, the first mode is the vehicle wash mode, and the instruction 1 is a voice instruction. The voice instruction detected by the microphone in the vehicle is "Enable the vehicle wash mode". In this case, the control apparatus enables the vehicle wash mode of the vehicle in response to the voice instruction.

Example 4: For example, the first mode is the vehicle wash mode, and the instruction 1 is a remote control instruction. The control apparatus receives a remote control instruction from the user terminal, and the remote control instruction instructs to enable the vehicle wash mode of the vehicle. In this case, the control apparatus enables the vehicle wash mode of the vehicle in response to the voice instruction.

S202: When the first parameter meets the first condition, the control apparatus performs a first operation corresponding to the first mode, where the first operation includes disabling the automatic power-on function of the vehicle.

It can be learned from the foregoing descriptions that the automatic power-on function is the power-on mechanism of the vehicle. To be specific, when detecting that the door is opened or the vehicle is unlocked, the control apparatus controls the vehicle to be powered on.

In the embodiment shown in FIG. 2, when the first mode of the vehicle is enabled, the control apparatus may obtain the speed and/or the gear of the vehicle, and disable the automatic power-on function of the vehicle when the speed and/or the gear of the vehicle meet/meets the first condition, so that the vehicle can be prevented from being frequently powered on due to frequent opening or closing of the door in the vehicle wash scenario, and a vehicle wash operation can be normally performed. This effectively improves user experience.

In this embodiment of this application, the first parameter includes the speed and/or the gear, and when the first parameter meets the first condition, the first operation corresponding to the first mode is performed. In other words, in this embodiment of this application, the vehicle is allowed to enter the first mode only when the first parameter meets the first condition. For example, when the speed is very low but is not 0, the vehicle is allowed to enter the first mode; or the vehicle may be allowed to enter the first mode at a plurality of gears.

In this embodiment of this application, the first condition may include that the speed of the vehicle is less than or equal to a first threshold and/or the gear of the vehicle is a first gear. The first threshold may be, for example, any value of 0 km/h, 2 km/h, or 3 km/h. This is not specifically limited in this embodiment of this application. The first gear may be a P gear or an N gear.

The vehicle wash scenario in this embodiment of this application relates to a static vehicle wash scenario and a mobile vehicle wash scenario. In the static vehicle wash scenario, the speed of the vehicle is 0. In other words, the vehicle is in a static state. In the mobile vehicle wash scenario, the speed of the vehicle is not 0. In other words, the vehicle is in a moving state. Further, the static vehicle wash scenario includes an in-vehicle wash scenario and an out-vehicle wash scenario. The in-vehicle wash scenario is a scenario in which a vehicle-mounted component inside the vehicle is cleaned, and the out-vehicle wash scenario is a scenario in which a vehicle-mounted component outside the vehicle is cleaned.

Example 1: For example, the first mode is the vehicle wash mode. The first condition may be that the speed of the vehicle is 0, and the gear of the vehicle is the P gear. Correspondingly, when the vehicle is shifted to the P gear and the speed is 0, the control apparatus disables the automatic power-on function of the vehicle, so that the vehicle can be prevented from being frequently powered on due to frequent opening or closing of the door in the static vehicle wash scenario, and the vehicle wash operation can be normally performed. This effectively improves user experience.

Example 2: For example, the first mode is the vehicle wash mode. The first condition may be that the speed of the vehicle is less than or equal to 3 km/h, and the gear of the vehicle is the N gear. Correspondingly, when the vehicle is shifted to the N gear and the speed is less than 3 km/h, the control apparatus disables the automatic power-on function of the vehicle, so that the vehicle can be prevented from being frequently powered on due to frequent opening of the door in the mobile vehicle wash scenario, and the vehicle wash operation can be normally performed. This effectively improves user experience.

Example 3: For example, the first mode is the vehicle wash mode. The first condition may be that the speed of the vehicle is equal to 0 km/h. Correspondingly, when the speed of the vehicle is 0, the control apparatus disables the automatic power-on function of the vehicle, so that the vehicle can be prevented from being frequently powered on due to frequent opening or closing of the door in the static vehicle wash scenario, and the vehicle wash operation can be normally performed. This effectively improves user experience.

Further, to enable a status of the vehicle-mounted component to meet requirements of different vehicle wash scenarios, the first operation may further include but is not limited to the following implementations:
Implementation 1: The control apparatus controls the vehicle to be powered off. In this embodiment of this application, "vehicle power-off" may be understood as that all circuits in the vehicle are turned off. In other words, a power supply device of the vehicle stops supplying power to the vehicle. When the vehicle is powered off, all components of the vehicle are not energized. For example, the first mode is the vehicle wash mode. Therefore, when the vehicle wash mode is enabled and the first parameter of the vehicle meets the first condition, the control apparatus controls the vehicle to be powered off, so that the user can be prevented from moving the vehicle or causing an insulation fault due to a misoperation in the vehicle wash scenario. This can effectively improve safety of the user during a vehicle wash and help the user clean the vehicle-mounted component (for example, the vehicle-mounted display) inside the vehicle. This effectively improves convenience of the vehicle wash operation.

In a possible implementation, for example, the first mode is the vehicle wash mode. After the first mode of the vehicle is enabled, the control apparatus may further obtain a power-off signal, to control the vehicle to be powered off. The power-off signal may be, for example, any one of a door closing signal, a vehicle locking signal, or a remote control instruction. In this way, when the vehicle wash mode of the vehicle is enabled, a plurality of methods for flexibly controlling the vehicle to be powered off are provided, so that the vehicle wash operation can be performed in a vehicle power-off state. This effectively improves security of the vehicle wash operation. For example, the door is closed, the vehicle is locked, or the vehicle is remotely controlled, to support a scenario in which a vehicle owner goes to a shopping mall and a vehicle washer waits in a queue to wash the vehicle.

Implementation 2: The control apparatus disables a first function of the vehicle, where the first function includes at least one of an automatic vehicle locking function, a warning function, a remote monitoring function, or a remote control function.

It can be learned from the foregoing descriptions that the automatic vehicle locking function is a vehicle locking mechanism. To be specific, when detecting that the user leaves the vehicle or the door is closed, the control apparatus controls the vehicle to be locked. In this way, when the first mode is enabled, the control apparatus disables the automatic vehicle locking function, so that the vehicle can be prevented from being frequently locked because the user frequently enters or exits the vehicle or frequently opens or closes the door in the vehicle wash scenario, and the vehicle wash operation can be normally performed. This further improves vehicle wash experience of the user.

In a possible implementation, the warning function may also be referred to as a "sentry mode", and is a security monitoring mechanism of the vehicle. To be specific, when detecting an emergency, the control apparatus controls a prompt apparatus to output corresponding warning prompt information. For example, when detecting that a stranger touches the vehicle, the control apparatus may control the prompt apparatus to output a corresponding prompt tone. In this way, when the first mode is enabled, the control apparatus disables the warning function, so that the vehicle can be prevented from outputting alarm information because the user touches the vehicle in the vehicle wash scenario, to effectively avoid interference of the alarm information to the user. This further improves the vehicle wash experience of the user.

The remote control function is a controlled mode of the vehicle. In this controlled mode, the vehicle-mounted component is controlled by the user terminal. In this way, that the first mode is the vehicle wash mode is used as an example. When the vehicle wash mode is enabled, the control apparatus disables the remote control function, so that the vehicle-mounted component is not remotely controlled by a terminal device of the user in the vehicle wash scenario, interference caused by the remote control to a vehicle wash person is avoided, and the vehicle wash operation can be normally performed. This further improves the vehicle wash experience of the user.

The remote monitoring function is a security monitoring mode of the vehicle. To be specific, a cloud device remotely monitors a status of the vehicle, and when detecting that a stranger attempts to open the vehicle, the cloud device controls the vehicle to start the vehicle locking mechanism. In this way, that the first mode is the vehicle wash mode is used as an example. When the vehicle wash mode is enabled, the control apparatus disables the remote monitoring function, so that the vehicle is not remotely controlled by the terminal device of the user in the vehicle wash scenario, interference caused by the remote monitoring function to the vehicle wash person is avoided, and the vehicle wash operation can be normally performed. This further improves the vehicle wash experience of the user.

It should be understood that, in this embodiment of this application, one or more of the automatic vehicle locking function, the warning function, or the remote control function may be disabled at the same time. Specifically, corresponding adjustment may be performed in different vehicle wash scenarios.

Implementation 3: The control apparatus adjusts a status of a component of the vehicle, where the component may include but is not limited to one or more of the following: a gear shifter, a rear trunk lock, a front trunk lock, a door lock, a window, a door handle, a charge port cover, a fuel filler cap, a wiper, an exterior rear view mirror, an interior rear view mirror, a sunroof, a panoramic roof, a sunshade, a steering wheel, a seat, or a vehicle-mounted device. In this way, that the first mode is the vehicle wash mode is used as an example. When the vehicle wash mode is enabled, and the first parameter of the vehicle meets the first condition, the control apparatus adjusts the status of the vehicle-mounted component, so that the status of the vehicle-mounted component meets the requirement of the vehicle wash scenario, and the vehicle wash operation can be normally performed. This further improves the vehicle wash experience of the user. The vehicle-mounted device may be one or more of a vehicle-mounted air conditioner, a vehicle-mounted sound box, or a seat. This is not specifically limited in this embodiment of this application.

For example, the first mode is the vehicle wash mode. If the component includes the gear shifter of the vehicle, when the vehicle wash mode is enabled, the control apparatus adjusts the gear shifter to the P gear or the N gear, so that the gear shifter of the vehicle is applicable to the different vehicle wash scenarios.

For another example, the first mode is the vehicle wash mode. If the component includes the door handle, when the vehicle wash mode is enabled, the control apparatus adjusts a status of the door handle to a retracted state, so that in a scenario of cleaning the exterior of the vehicle, water can be effectively prevented from entering the vehicle from the door handle.

For another example, the first mode is the vehicle wash mode. When the component is the steering wheel and the vehicle wash mode is enabled, the control apparatus may adjust a location and an angle of the steering wheel, to prevent the steering wheel from blocking another component inside the vehicle, and help the user can clean the components inside the vehicle.

For another example, the first mode is the vehicle wash mode. When the component is the seat and the vehicle wash mode is enabled, the control apparatus may adjust a location, an angle, or a posture of the seat, to prevent the seat from blocking another component inside the vehicle, and help the user clean the components inside the vehicle.

For another example, the first mode is the vehicle wash mode. When the component is the panoramic roof and the vehicle wash mode is enabled, the control apparatus may adjust a transmittance of the panoramic roof, so that there is sufficient light in the vehicle, to help the user clean the component inside the vehicle.

For another example, the first mode is the vehicle wash mode. When the component is a sunshade and the vehicle wash mode is enabled, the control apparatus may adjust an opening/closing location or a moving location of the sunshade, to help the user clean an inner side of the window.

For another example, the first mode is the vehicle wash mode. If the component includes the sunroof of the vehicle, when the vehicle wash mode is enabled, the control apparatus may control the sunroof to close, so that in a scenario of cleaning the exterior of the vehicle, water can be effectively prevented from entering the vehicle from the sunroof.

For another example, the first mode is the vehicle wash mode. When the component is the front trunk lock and the vehicle wash mode is enabled, the control apparatus may adjust opening/closing or an opening/closing angle of a front trunk, to help the user clean the front trunk lock.

For another example, the first mode is the vehicle wash mode. When the component is the rear trunk lock and the vehicle wash mode is enabled, the control apparatus may adjust opening/closing or an opening/closing angle of a rear trunk, to help the user clean the rear trunk lock.

For another example, the first mode is the vehicle wash mode. When the component is the exterior rear view mirror and the vehicle wash mode is enabled, the control apparatus may adjust an angle of a rear exterior rear view mirror, to help the user clean a body.

For another example, the first mode is the vehicle wash mode. When the component is the interior rear view mirror and the vehicle wash mode is enabled, the control apparatus may adjust angles of the interior and exterior rear view mirrors, to help the user clean a body.

For another example, the first mode is the vehicle wash mode. If the vehicle-mounted component includes the exterior rear view mirror or the exterior rear view mirror of the vehicle, when the vehicle wash mode is enabled, the control apparatus may control the rear view mirror to be in a first state (namely, a folded state), to help the user perform the vehicle wash operation. Further, in a possible implementation, after enabling the vehicle wash mode of the vehicle, the control apparatus may further control the rear view mirror of the vehicle to maintain the first state (namely, the folded state). In this way, regardless of whether the vehicle is in a power-on state or a power-off state, the rear view mirror remains in the folded state, so that a state of the rear view mirror meets the requirement of the vehicle wash scenario.

Implementation 1 to implementation 3 may be used separately or in combination.

To enable the user to perceive necessity of performing the first operation, and prevent interruption of the vehicle wash operation caused by a misoperation of the user, in a possible implementation, the control apparatus may obtain an instruction 2. The instruction 2 indicates a second operation. The control apparatus controls the prompt apparatus to output first prompt information. The first prompt information indicates risk information corresponding to a fourth operation. The fourth operation is an operation opposite to the first operation, and the instruction 2 may be a remote control instruction or a human-computer interaction instruction. For example, the first operation is to close a window, the fourth operation is to open the window, and the instruction 2 is a user instruction. After closing the window, the control apparatus detects a voice instruction "Open the window", and then controls the prompt apparatus to display a risk warning shown in FIG. 3C. In this way, the user can perceive importance of closing the window in the vehicle wash scenario.

To enable the user to intuitively perceive a process in which the control apparatus adjusts the status of the vehicle-mounted component, in a possible implementation, in a process of performing the first operation, the control apparatus may further control the prompt apparatus to output second prompt information. The second prompt information may indicate that a fifth operation in the first operation fails to be performed.

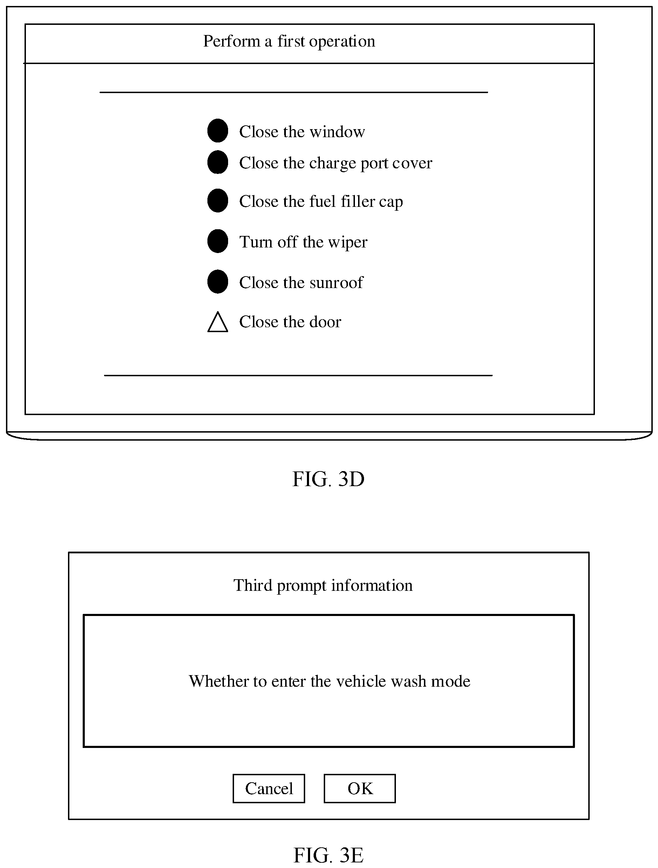

Example 1: As shown in FIG. 3D, for example, the first operation is to close the window, the charge port cover, the fuel filler cap, the wiper, the sunroof, and the door, the fifth operation is to close the door, and the second prompt information uses a circle icon and a triangle icon. If the control apparatus successfully closes the window, the charge port cover, the fuel filler cap, the wiper, and the sunroof, a circle icon is displayed in front of an identifier corresponding to each of the window, the charge port cover, the fuel filler cap, the wiper, and the sunroof, to indicate to the user that the window, the charge port cover, the fuel filler cap, the wiper, and the sunroof are successfully closed. If the control apparatus fails to close the door, a triangle icon is displayed in front of an identifier of the door, to indicate to the user that the door fails to be closed.

Example 2: For example, the first operation is to close the window, the charge port cover, the fuel filler cap, the wiper, the sunroof, and the door, the fifth operation is to close the door, and the second prompt information uses a red icon and a green icon. If the control apparatus successfully closes the window, the charge port cover, the fuel filler cap, the wiper, and the sunroof, a green icon is displayed in front of an identifier corresponding to each of the window, the charge port cover, the fuel filler cap, the wiper, and the sunroof, to indicate to the user that the window, the charge port cover, the fuel filler cap, the wiper, and the sunroof are successfully closed. If the control apparatus fails to close the door, a red icon is displayed in front of an identifier of the door, to indicate to the user that the door fails to be closed.

Further, the control apparatus may further obtain an instruction 3. The instruction 3 instructs to perform a third operation again. In this way, a status of the vehicle-mounted component can better meet the requirement of the vehicle wash scenario. The instruction 3 may include a remote control instruction or a human-computer interaction instruction.

Example 1: For example, the first operation is to close the window and the door, and the fifth operation is to close the window. If the second prompt information indicates that the window fails to be closed, the control apparatus detects a tap operation on a window closing button, converts the tap operation into the instruction 3, and controls, in response to the instruction 3, the window to be closed.

Example 2: For example, the first operation is to close the window and the door, and the fifth operation is to close the door. If the second prompt information indicates that the door fails to be closed, the control apparatus obtains a voice instruction "Close the door", and controls, in response to the voice instruction, the door to be closed.

In this embodiment of this application, the control apparatus disables the first mode in a plurality of implementations, including but not limited to the following manners:
Implementation 1: The control apparatus obtains an instruction 4, where the instruction 4 instructs to disable the first mode; and disables the first mode in response to the instruction 4, where the instruction 4 includes a remote control instruction or a human-computer interaction instruction, and the human-computer interaction instruction includes a voice instruction, a text instruction, a gesture instruction, or the like. In this way, the control apparatus may control, based on the detected remote control instruction or human-computer interaction instruction, the vehicle to disable the first mode, so that the user can flexibly control disabling of the first mode. This effectively improves user experience.

Example 1: For example, the first mode is the vehicle wash mode, and the instruction 4 is a human-computer interaction instruction. If detecting a tap operation performed by the user on the "Vehicle wash mode" in the operation interface, the control apparatus converts the tap operation into the instruction 4, and disables the vehicle wash mode in response to the instruction 4.

Example 2: For example, the first mode is the vehicle wash mode, and the instruction 4 is a voice instruction. If detecting a voice instruction "Disable the first mode" input by the user, the control apparatus disables the first mode in response to the voice instruction.

Implementation 2: For example, the first mode is the vehicle wash mode. The control apparatus detects that the speed of the vehicle is greater than or equal to a fifth threshold, and then disables the first mode. In this way, the control apparatus does not need to be operated by the user, thereby further improving vehicle wash experience of the user. The fifth threshold may be, for example, 20 km/h.

To further optimize a use manner of the first mode and improve vehicle wash experience of the user, in a possible implementation, after the control apparatus enables the first mode of the vehicle, the control apparatus may further store status information of the vehicle before the vehicle is in the power-off state, and obtain the status information of the vehicle after the vehicle is powered on. The status information of the vehicle may be understood as related setting performed by the user on the first mode in the first mode, for example, at least one of disabling an automatic power-on function, an automatic vehicle locking function, a remote control function, or a warning function. In this way, when the user enables the first mode, the control apparatus may save the status information set for the vehicle before the vehicle is in the power-off state. In this way, after the vehicle is powered on again, the status information of the vehicle may be automatically obtained, so that the first mode may be re-entered based on the status information, and the user does not need to set the status information again.

To facilitate corresponding setting of the first mode of the vehicle by a user other than the vehicle owner, the vehicle further sets a guest mode. In a possible implementation, the control apparatus may exit a vehicle owner account and enter the guest mode. In this way, for example, the first mode is the vehicle wash mode. After the vehicle owner account is exited, the guest mode is enabled, so that the vehicle wash person has permission to operate the first mode in the vehicle wash process. This helps the vehicle wash operation to be performed smoothly.

It should be noted that after exiting the first mode, the vehicle enters the first mode again in a plurality of implementations, including but not limited to the following manners:
Manner 1: The control apparatus obtains a power-on signal, controls, based on the power-on signal, the vehicle to be powered on, and re-enters the first mode. The power-on signal may be a braking signal or an unlocking signal. This is not specifically limited in this embodiment of this application. For example, when detecting the braking signal, the control apparatus may control the vehicle to be powered on, and the vehicle may automatically enter the first mode after being powered on. In this way, user experience can be effectively improved.
Manner 2: The control apparatus controls the prompt apparatus to output third prompt information, where the third prompt information indicates the user to choose whether to re-enter the first mode. For example, the first mode is the vehicle wash mode. After the vehicle is powered on, the control apparatus may control the prompt apparatus to output third prompt information "Whether to enter the vehicle wash mode" shown in FIG. 3E. If the user taps "OK", the control apparatus controls the vehicle to enter the vehicle wash mode.

It should be noted that the "user" herein may be a vehicle owner or the vehicle wash person. This is not specifically limited in this embodiment of this application For example, the first mode is the vehicle wash mode. When the vehicle enables the guest mode, in this scenario, the vehicle automatically enters the vehicle wash mode after being powered on, or the control apparatus guides the user to control the vehicle to enter the vehicle wash mode. This helps the vehicle wash person efficiently and conveniently perform the vehicle wash operation.

It can be learned from the foregoing descriptions that the vehicle wash scenario in this embodiment of this application mainly relates to the mobile vehicle wash scenario and the static vehicle wash scenario. The mobile vehicle wash scenario means to move a vehicle to a first location. The static vehicle wash scenario includes the in-vehicle wash scenario and an out-vehicle wash scenario. The in-vehicle wash scenario is a scenario in which a vehicle-mounted component inside the vehicle is cleaned, and the out-vehicle wash scenario is a scenario in which a vehicle-mounted component outside the vehicle is cleaned.

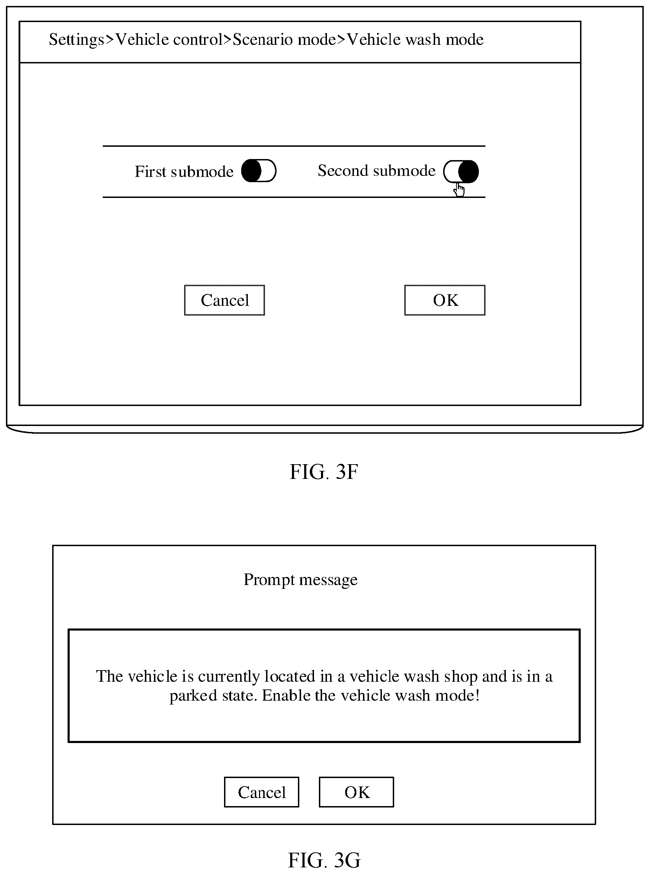

In this embodiment of this application, the first submode is set for the in-vehicle wash scenario, and the second submode is set for the mobile vehicle wash scenario. Correspondingly, the first submode is used to clean a first area inside the vehicle, the first area includes a first display of the vehicle, and the first submode is applicable to the in-vehicle wash scenario. The second submode is used to move the vehicle to the first location, and is applicable to the mobile vehicle wash scenario. The "first location" may be understood as a geographical location of the vehicle wash operation, for example, a vehicle wash room. As shown in FIG. 3F, for example, the first mode is the vehicle wash mode. After the user enables the vehicle wash mode, the first submode and the second submode may be displayed in the user operation interface. If the control apparatus detects a tap operation performed by the user on the first submode or the second submode, the control apparatus enables a corresponding submode. The following describes the two submodes with reference to Embodiment 2 and Embodiment 3.

### Embodiment 2

FIG. 4 is an example of a schematic flowchart of another vehicle control method according to an embodiment of this application. The method may be applied to the architecture of the system shown in FIG. 1A. The method includes the following steps.

S401: A control apparatus obtains a first instruction, where the first instruction instructs to enable a first submode.

The first instruction may be a human-computer interaction instruction or a remote control instruction. The human-computer interaction instruction may be any one of a voice instruction, a gesture instruction, or a text instruction. This is not specifically limited in this embodiment of this application. In this way, the first submode used to clean a component inside a vehicle is set, to effectively meet a requirement of an in-vehicle wash scenario. In addition, a plurality of manners of flexibly controlling enabling of the first submode of the vehicle are provided, to help a user control the first submode. This effectively improves user experience.

S402: When the vehicle meets a second condition, the control apparatus enables the first submode in response to the first instruction.

In this embodiment of this application, the second condition may include that the first mode is enabled on the vehicle, a second submode is not enabled on the vehicle, a speed of the vehicle is less than or equal to a second threshold, or a status of a gear of the vehicle is a P gear or an N gear.

The control apparatus enables the first submode when determining that the first mode is enabled on the vehicle, so that the first submode can be prevented from being enabled by a misoperation of the user. This effectively improves user experience. In addition, the control apparatus enables the first submode when determining that the second submode is not enabled currently, so that a security risk caused by interruption of the second submode can be prevented. This further improves security of a vehicle wash operation. The control apparatus enables the first submode when determining that the speed of the vehicle is less than or equal to the second threshold, so that the speed of the vehicle meets a requirement of a vehicle wash scenario. The control apparatus enables the first submode when determining that the gear of the vehicle is the P gear or the N gear, so that the first submode (namely, an in-vehicle wash mode) can be prevented from being enabled by a misoperation of the user when the vehicle is moving forward (that is, the vehicle is shifted to a D gear). This effectively improves user experience. In addition, the control apparatus enables the first submode after determining that the first mode is enabled on the vehicle, the second submode is not enabled, the speed of the vehicle is less than or equal to the second threshold, and the gear of the vehicle is the P gear or the N gear. This can improve security of the vehicle wash operation, and can also improve user experience.

S403: The control apparatus performs a second operation corresponding to the first submode.

The second operation includes adjusting the gear of the vehicle to the P gear. It should be noted that, when the component inside the vehicle is cleaned, if the vehicle moves, personal safety of a vehicle wash person is threatened. Therefore, in this design, in the in-vehicle wash scenario, the gear of the vehicle is adjusted to the P gear, so that a security risk caused by vehicle movement in the in-vehicle wash scenario can be effectively prevented. This effectively improves security of the vehicle wash operation.

In a possible implementation, the second operation may further include at least one of controlling the vehicle to be powered off, disabling a first function of the vehicle, or adjusting a status of a component of the vehicle. For a specific implementation and beneficial effects, refer to the related descriptions in Embodiment 1. Details are not described herein again.

S404: The control apparatus obtains a second instruction, where the second instruction instructs to disable the first submode.

The second instruction includes at least one of a power-on signal, a vehicle locking signal, or a user instruction. The power-on signal may be a brake power-on signal or an engine startup signal, and the user instruction may be a human-computer interaction instruction or a remote control instruction. This is not specifically limited in this embodiment of this application. In this way, a plurality of manners of controlling disabling of the first submode of the vehicle are provided, to help the user flexibly control the first submode. This effectively improves user experience.

S405: The control apparatus disables the first submode in response to the second instruction.

Example 1: For example, the second instruction is the brake power-on signal. When the first submode is enabled, the control apparatus detects the brake power-on signal, and disables the first submode.

Example 2: For example, the second instruction is a voice instruction. When the first submode is enabled, the control apparatus detects a voice instruction "Disable the first submode", and controls to disable the first submode.

In the embodiment shown in FIG. 4, the control apparatus controls enabling and disabling of the first submode in response to obtained instructions (namely, the first instruction and the second instruction), so that use of the first submode meets the in-vehicle wash scenario.

### Embodiment 3

FIG. 5 is an example of a schematic flowchart of still another vehicle control method according to an embodiment of this application. The method may be applied to the architecture of the system shown in FIG. 1A. The method includes the following steps.

S501: A control apparatus detects a third instruction, where the third instruction instructs to enable a second submode.

The third instruction may be a human-computer interaction instruction or a remote control instruction. This is not specifically limited in this embodiment of this application. In this way, a plurality of manners of flexibly controlling enabling of the second submode of a vehicle are provided, to help a user flexibly control the second submode. This effectively improves user experience.

S502: When the vehicle meets a third condition, the control apparatus enables the second submode in response to the third instruction.

In this embodiment of this application, the third condition includes that a first mode is enabled on the vehicle, the first submode is not enabled on the vehicle, a speed of the vehicle is less than or equal to a third threshold, or a status of a gear of the vehicle is a D gear.

In this way, the control apparatus enables the second submode when determining that the first mode is enabled on the vehicle, so that the second submode can be prevented from being enabled by a misoperation of the user. This effectively improves user experience. In addition, the control apparatus enables the second submode when determining that the first submode is not enabled currently, so that a security risk caused by interruption of the first submode can be prevented. This further improves security of a vehicle wash operation. The control apparatus enables the second submode when determining that the speed of the vehicle is less than or equal to the third threshold, so that the speed of the vehicle meets a requirement of a vehicle wash scenario. The control apparatus enables the second submode when determining that the gear of the vehicle is the D gear, so that the status of the gear of the vehicle meets a requirement of a mobile vehicle wash scenario. In addition, the control apparatus enables the second submode only after determining that the first mode is enabled on the vehicle, the second submode is not enabled currently, the speed of the vehicle is less than or equal to the third threshold, and the status of the gear of the vehicle is the D gear. This can improve security of the vehicle wash operation, and can also improve user experience.

S503: The control apparatus performs a third operation corresponding to the second submode.

The third operation includes adjusting the gear of the vehicle to an N gear. It should be noted that, in a scenario in which the vehicle is moved to a laundry, if the gear of the vehicle is the P gear, an electrical park brake (electrical park brake, EPB) of the vehicle is damaged by a conveyor. In this way, when the second submode is enabled, the control apparatus adjusts the gear of the vehicle to the N gear, so that a vehicle brake system can be prevented from being damaged by the conveyor in the scenario in which the vehicle is moved to the laundry.

Further, after the vehicle is powered off, the control apparatus may further control the gear of the vehicle to remain the N gear. In this way, the vehicle remains the N gear in the mobile vehicle wash scenario, so that the vehicle has corresponding power and can move to a first location (for example, a vehicle wash room).

In a possible implementation, when the speed of the vehicle is greater than the third threshold, the control apparatus may further adjust the gear of the vehicle to the P gear. For example, the third threshold is 10 km/h. When the speed of the vehicle is greater than 10 km/h, the control apparatus may further adjust the gear of the vehicle to the P gear. In this way, the vehicle may be prevented from moving too fast, thereby improving safety of the user during a vehicle wash.

In a possible implementation, the third operation may further include at least one of controlling the vehicle to be powered off, disabling the first function of the vehicle, or adjusting a status of a component of the vehicle. For a specific implementation and beneficial effects, refer to the related descriptions in Embodiment 1. Details are not described herein again.

S504: The control apparatus disables the second submode when the vehicle meets a fourth condition.

In this embodiment of this application, the fourth condition includes: detecting a fourth instruction, where the fourth instruction instructs to disable the second submode; or detecting that the speed of the vehicle is greater than or equal to a fourth threshold and/or that the gear shifter of the vehicle is not the N gear. The fourth instruction may be a human-computer interaction instruction or a remote control instruction. In this way, a plurality of manners of controlling disabling of the second submode of the vehicle are provided, to help the user control the second submode. This effectively improves user experience.

Example 1: For example, the fourth instruction is a voice instruction. If obtaining a voice instruction "Disable the second submode", the first control apparatus disables the second submode in response to the voice instruction.

Example 2: For example, the fourth threshold is 3 km/h. If detecting that the speed of the vehicle is 4 km/h, the control apparatus disables the second submode.

Example 3: For example, the fourth threshold is 3 km/h. If detecting that the speed of the vehicle is 5 km/h and the gear of the vehicle is the D gear, the control apparatus disables the second submode.

Example 4: For example, the fourth threshold is 3 km/h. If detecting that the gear of the vehicle is the D gear, the control apparatus disables the second submode.

In Embodiment 3, the second submode used to move the vehicle to the first location is set. The second submode may be applied to a scenario in which the vehicle is moved to the vehicle wash room, to effectively meet a requirement of moving the vehicle in the vehicle wash scenario. In addition, a plurality of manners of flexibly controlling enabling and closing of the second submode of the vehicle are provided, to help the user control the second submode. This effectively improves user experience.

It should be understood that, when a vehicle wash mode is enabled, the vehicle may automatically adjust each component to a state suitable for a vehicle wash, to ensure normal running of a vehicle wash process. However, in practice, the user may forget to enable the vehicle wash mode before washing the vehicle, causing damage to the vehicle in the vehicle wash process.

In view of this, embodiments of this application further provide a vehicle control method, to prompt a user to enable a vehicle wash mode before washing a vehicle, so as to avoid a case in which the vehicle is damaged because the user forgets to enable the vehicle wash mode before washing the vehicle. This can effectively improve user experience. The following describes the vehicle control method with reference to Embodiment 4.

### Embodiment 4

FIG. 6 is an example of a schematic flowchart of yet another vehicle control method according to an embodiment of this application. The method may be applied to the architecture of the system shown in FIG. 1A. The method includes the following steps.

S601: Generate a prompt message when a preset condition is met.

The prompt message prompts a user to enable a vehicle wash mode, and the preset condition includes that a vehicle is located in a vehicle wash shop and is in a parked state.

Specifically, when the preset condition is met, the prompt message may be first controlled to be generated, and then the prompt message is output to the user by using a prompt apparatus (correspondingly, the user may obtain the prompt message by using the prompt apparatus). For example, the prompt apparatus may output a prompt message "The vehicle is currently located in a vehicle wash shop and is in a parked state. Enable the vehicle wash mode!" shown in FIG. 3G.

The prompt apparatus may be a vehicle-mounted display, for example, the vehicle-mounted display displays the prompt message for the user. The prompt apparatus may alternatively be a vehicle-mounted speaker, for example, the speaker plays the prompt message for the user. The prompt apparatus may alternatively be another terminal device carried by the user or loaded on the vehicle, for example, the terminal device displays or plays the prompt message for the user.

In an implementation, that a vehicle is located in a vehicle wash shop and is in a parked state may be specifically: A navigation destination of the vehicle is the vehicle wash shop, and the vehicle arrives at the destination and is parked. That the navigation destination of the vehicle is the vehicle wash shop may be that a destination input by the user during route navigation is the vehicle wash shop, or may be that the user selects the vehicle wash shop through surrounding search. This is not limited.

In another implementation, that a vehicle is located in a vehicle wash shop and is in a parked state may be specifically: The vehicle travels to a place at which the user previously enables the vehicle wash mode, and is parked. In this case, the place may be recorded each time the vehicle wash mode is enabled.

In still another implementation, that a vehicle is located in a vehicle wash shop and is in a parked state may be specifically: The vehicle perceives that a current parking location of the vehicle is the vehicle wash shop.

It should be understood that, compared with a manner of navigation and positioning that is used to determine whether to arrive at the vehicle wash shop, a perception manner can ensure accuracy of a parking location. For example, when the vehicle wash shop is located in a non-ground scenario (for example, an underground scenario or a high-rise floor scenario) or a scenario with a complex road (for example, a lane with complex road planning), whether the vehicle is located in the vehicle wash shop may not be accurately determined in the manner of navigation or positioning, but can be accurately determined in the perception manner.

S602: Receive a user instruction. The user instruction instructs to enable the vehicle wash mode.

The user instruction may be a human-computer interaction instruction or a remote control instruction. The human-computer interaction instruction may be any one of a voice instruction, a gesture instruction, a text instruction, or the like. This is not specifically limited in this embodiment of this application. The remote control instruction may be an instruction sent by the user by using a user terminal device.

For example, the user may perform selection through a "Settings>Vehicle control>Scenario mode" menu in a vehicle control app and instruct to enable the vehicle wash mode, or may perform selection through a menu button in a control center of the vehicle and instruct to enable the vehicle wash mode, or may instruct, by using a voice instruction, to enable the vehicle wash mode, or may perform selection by using the user terminal device and instruct to enable the vehicle wash mode. This is not limited.

For example, if the prompt apparatus outputs a prompt message "The vehicle is currently located in a vehicle wash shop and is in a parked state. Enable the vehicle wash mode!" and simultaneously outputs "Cancel" and "OK" options, the user may select the "OK" option through tapping or by using a voice instruction to enable the vehicle wash mode.

S603: Enable the vehicle wash mode according to the user instruction. It should be understood that after the vehicle wash mode is enabled, each component of the vehicle may start to be adjusted to a state suitable for a vehicle wash.

Based on this embodiment of this application, when the vehicle is located in the vehicle wash shop and is in the parked state, the user may be prompted in a timely manner to enable the vehicle wash mode, to avoid damage to the vehicle because the user forgets to enable the vehicle wash mode before washing the vehicle. This can effectively improves user experience, and can further avoid impact on normal traveling of the vehicle because the user enables the vehicle wash mode during vehicle traveling.

In a possible design, when the preset condition is met, the user may not be prompted to enable the vehicle wash mode, but the vehicle is directly controlled to intelligently enable the vehicle wash mode, to improve user experience. In addition, when the vehicle wash mode is intelligently enabled, the user may be further prompted.

In a possible design, after the vehicle wash mode is enabled, a Bluetooth connection between the vehicle and a terminal device carried by the user may be controlled to be released and forbidden.

The terminal device carried by the user may be, for example, an electronic device like a mobile phone, a tablet computer, or a wearable device. The mobile phone is used as an example. Generally, after a Bluetooth connection is established between the mobile phone of the user and the vehicle, an incoming call prompt tone on the mobile phone is played on the vehicle. However, in the vehicle wash process, the user may not be in the vehicle. If Bluetooth is still connected, the user cannot receive an incoming call, resulting in poor user experience.

In view of this, in this embodiment of this application, after the vehicle wash mode is enabled, the Bluetooth connection between the vehicle and the terminal device carried by the user may be controlled to be released and forbidden. In this way, after the vehicle wash mode is entered, and in the vehicle wash process, a prompt tone and the like on the terminal device of the user are not automatically switched to the vehicle. This can improve user experience.

In this application, a control operation may be understood as generating and sending a control instruction to an execution device, and then executing the control instruction by using the execution device. For example, a control instruction is first generated, where the control instruction instructs to release and forbid the Bluetooth connection between the vehicle and the terminal device carried by the user; the control instruction is sent to the execution device; and then the execution device performs an operation of releasing and forbidding the Bluetooth connection between the vehicle and the terminal device carried by the user. It should be understood that, for the control operation in this application, reference may be made to the description. Details are not described below.

In a possible design, after the vehicle wash mode is enabled, remote control on the vehicle may be controlled to be stopped and forbidden. Specifically, the remote control on the vehicle by a website or the terminal device carried by the user may be controlled to be stopped and forbidden.

In a conventional solution, a user may remotely control a vehicle after leaving the vehicle. However, in a vehicle wash process, if the user remotely controls the vehicle, water may enter the vehicle or normal vehicle wash may be affected. For example, in the vehicle wash process, if the user remotely controls to open a window after leaving the vehicle, water enters the vehicle; or if the user remotely controls to turn on an air conditioner after leaving the vehicle, a sound of a machine may scare a vehicle wash person.

In view of this, in this embodiment of this application, after the vehicle wash mode is enabled according to the user instruction, the remote control on the vehicle may be controlled to be stopped and forbidden, to prevent the remote control operation from affecting the vehicle wash process, causing water to enter the vehicle, or the like.

For example, based on FIG. 1A, the remote control on the vehicle may be controlled to be stopped and forbidden in the following manners.

Manner 1: The controller sends a remote control forbidding command to the T-Box, and the T-Box shields a remote control command from the user terminal 300 or the server 200.

Manner 2: The controller sends a remote control forbidding command to the server 200 by using the TBox, and the server 200 shields a remote control command from the user terminal 300.

Manner 3: The controller sends a remote control forbidding command to the user terminal 300 by using the T-Box or the server 200, and the user terminal 300 shields a remote control command from the user.

In a possible design, after the vehicle wash mode is enabled, when the speed of the vehicle is greater than or equal to a first preset value, a light of the vehicle may be controlled to be turned on; or when the speed of the vehicle is less than or equal to a second preset value and holding duration is greater than or equal to second preset duration, a light of the vehicle may be controlled to be turned off.

The first preset value and the second preset value may be the same. For example, the first preset value and the second preset value may be 3 km/h or 4 km/h. Alternatively, the first preset value and the second preset value may be different. For example, the first preset value is 4 km/h, and the second preset value is 3 km/h. The second preset duration may be, for example, 10s or 15s.

In this embodiment of this application, after the vehicle wash mode is entered, the light may be controlled to be turned on or off based on an actual situation. For example, when the speed is greater than or equal to the first preset value, it indicates that the vehicle may be moving. Therefore, the light may be controlled to be turned on, to meet a vehicle movement requirement in a vehicle wash shop. For another example, when the speed is less than or equal to the second preset value and holds for a period of time, it indicates that the vehicle may be in a vehicle wash state, and the light may be controlled to be turned off, to avoid impact on the vehicle wash process.

In a possible design, after the vehicle wash mode is enabled, when a state of charge of the vehicle is less than or equal to a third preset value, a vehicle-mounted air conditioner may be controlled to be turned off, to avoid exhaustion of the state of charge. In addition, after the vehicle-mounted air conditioner is turned off, the user may also manually turn on the air conditioner, which is not limited. The third preset value may be, for example, 5%, 8%, or 10%.

In addition, it should be further noted that, generally, after leaving the vehicle, the user may remotely enable the vehicle wash mode by using a carried terminal device. Furthermore, to help a vehicle wash person clean the vehicle, the vehicle is automatically unlocked when the vehicle wash mode is remotely enabled. In this case, it is easy to cause loss of an item of the user in the vehicle or leakage of vehicle information.

In view of this, this embodiment of this application further proposes that when the user remotely enables the vehicle wash mode, the user is prompted that the vehicle is automatically unlocked after the vehicle wash mode is enabled, so that the user re-determines, based on a security degree of an environment in which the vehicle is located, whether to enable the vehicle wash mode, to avoid loss of the item in the vehicle or leakage of the vehicle information.

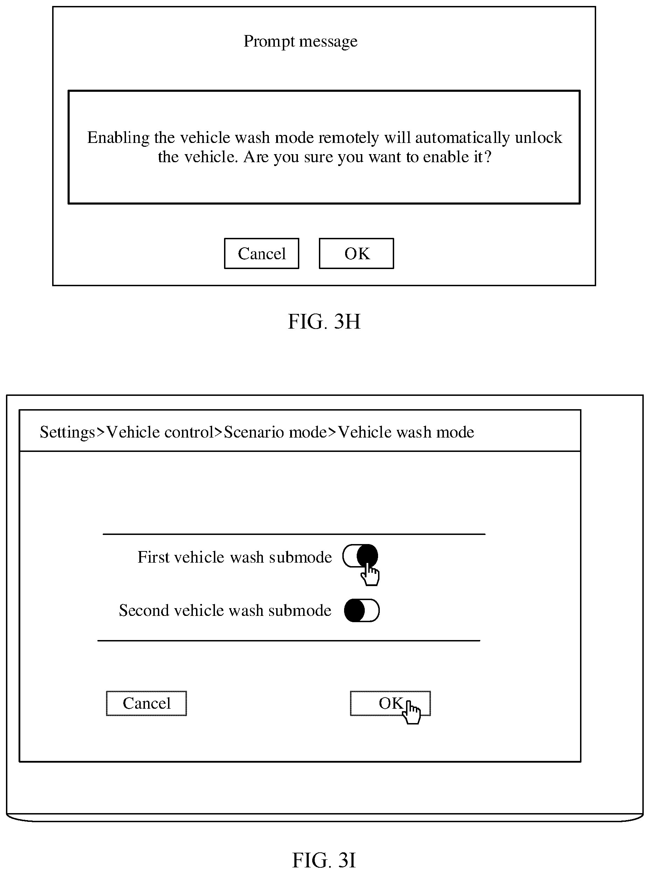

Specifically, when the user remotely enables the vehicle wash mode, the prompt message may be first controlled to be generated, and then the prompt message is output to the user by using a prompt apparatus (correspondingly, the user may obtain the prompt message by using the prompt apparatus). For example, the prompt apparatus may output a prompt message "Enabling the vehicle wash mode remotely will automatically unlock the vehicle. Are you sure you want to enable it?" shown in FIG. 3H, and simultaneously output "Cancel" and "OK" options. In view of this, the user may select the "OK" option through tapping or by using a voice instruction to confirm enabling.

### Embodiment 5

In a possible design, the vehicle wash mode may further include a first vehicle wash submode and a second vehicle wash submode. The first vehicle wash submode may be used in a first vehicle wash scenario, and the second vehicle wash submode may be used in a second vehicle wash scenario, so that the user can select different vehicle wash modes based on an actual vehicle wash scenario. This can improve user experience.

For example, the first vehicle wash scenario may be a manual vehicle wash scenario or another non-conveyor vehicle wash scenario, and the second vehicle wash scenario may be a conveyor vehicle wash scenario. Based on this example, when the user needs to wash the vehicle through a conveyor, the user may select the second vehicle wash submode; and when the user needs to wash the vehicle manually or without using the conveyor, the user may select the first vehicle wash submode.

It should be understood that, in an actual operation, the vehicle wash mode may be further divided into more vehicle wash submodes, and different vehicle wash submodes are applicable to different vehicle wash scenarios. This is not limited. For ease of description, in this embodiment, an example in which the first vehicle wash submode is used in the manual vehicle wash scenario or another non-conveyor vehicle wash scenario, and the second vehicle wash submode is used in the conveyor vehicle wash scenario is used for description.

FIG. 7 is an example of a schematic flowchart of still yet another vehicle control method according to an embodiment of this application. The method may be applied to the architecture of the system shown in FIG. 1A. The method includes the following steps.

S701: Receive a first instruction of a user. The first instruction of the user instructs to enable a vehicle wash mode.

The first instruction of the user may be a human-computer interaction instruction or a remote control instruction. The human-computer interaction instruction may be any one of a voice instruction, a gesture instruction, or a text instruction. This is not specifically limited in this embodiment of this application.

For example, the user may perform selection through a "Settings>Vehicle control>Scenario mode" menu in a vehicle control app and confirm to enter the vehicle wash mode, as shown in FIG. 3A; or may perform selection through a menu button in a control center of a vehicle and confirm to enter the vehicle wash mode, as shown in FIG. 3B; or may instruct, by using a voice instruction, to enable the vehicle wash mode; or may perform selection by using a user terminal device and enable the vehicle wash mode. This is not limited.

S702: Control, in response to the first instruction of the user, to display a first vehicle wash submode and a second vehicle wash submode.

In other words, after the user instructs to enable the vehicle wash mode, a display apparatus is controlled to display the first vehicle wash submode and the second vehicle wash submode, for the user to perform selection based on an actual vehicle wash scenario.

For example, as shown in FIG. 3I, after the user performs selection through the "Settings>Vehicle control>Scenario mode" menu in the vehicle control app and confirms to enter the vehicle wash mode, the first vehicle wash submode and the second vehicle wash submode may be displayed in the user operation interface, for the user to perform further selection.

For example, as shown in FIG. 3J-1 to FIG. 3J-3, the user may alternatively perform selection through the menu button in the control center of the vehicle and confirm to enter the vehicle wash mode. The first vehicle wash submode and the second vehicle wash submode may be displayed in the user operation interface, for the user to perform further selection.

For example, the user may alternatively instruct, by using a voice instruction, to enable the vehicle wash mode, or may perform selection by using the user terminal device and enable the vehicle wash mode. The first vehicle wash submode and the second vehicle wash submode may be displayed in the user operation interface, for the user to perform further selection.

In a possible design, when the first vehicle wash submode and the second vehicle wash submode are controlled to be displayed, related function descriptions of the first vehicle wash submode and the second vehicle wash submode may be further controlled to be displayed, for example, a scenario to which the first vehicle wash submode and the second vehicle wash submode are applicable, an enabling condition for entering the first vehicle wash submode and the second vehicle wash submode, or an adjustment status of a component after the first vehicle wash submode and the second vehicle wash submode are entered. The enabling condition is a condition for entering the first vehicle wash submode or the second vehicle wash submode.

For example, when the first vehicle wash submode is applicable to a manual vehicle wash scenario or another non-conveyor vehicle wash scenario, an enabling condition of the first vehicle wash submode may include that a speed is less than or equal to a preset value (for example, 3 km/h) and the vehicle is currently in a non-scenario mode (for example, a rest mode or an in-car care mode), and the like. In other words, the first vehicle wash submode can be entered only when the foregoing enabling condition is met in practice.

For example, when the second vehicle wash submode is applicable to a conveyor vehicle wash scenario, an enabling condition of the second vehicle wash submode may include that the vehicle is currently in a non-exhibition mode and a non-scenario mode (for example, a rest mode or an in-car care mode). In this case, a related function description of the second vehicle wash submode may include: "After the vehicle wash submode is enabled, the vehicle is automatically shifted to the N gear, and automatically disables an AVH function", to prompt the user that the vehicle is not locked in the conveyor vehicle wash scenario after this function is enabled.

For example, when the second vehicle wash submode is applicable to the conveyor vehicle wash scenario, the enabling condition of the second vehicle wash submode may further include that the vehicle is currently in the P gear and in a braking state. In other words, the second vehicle wash submode can be entered only when the vehicle is currently in the P gear and in the braking state. In this case, a related function description of the second vehicle wash submode may include: "The vehicle is currently in the P gear and in the braking state. The vehicle is automatically shifted to the N gear after this vehicle wash submode is enabled". It should be understood that, when the vehicle is in the P gear and in the braking state, the AVH function is triggered to be disabled, so that the vehicle can be prevented from being locked during a conveyor vehicle wash. In this case, after the second vehicle wash submode is enabled, the AVH function does not need to be controlled to be disabled.

S703: Receive a second instruction of the user. The second instruction of the user instructs to select a vehicle wash submode.

Similarly, the second instruction of the user may be a human-computer interaction instruction or a remote control instruction. The human-computer interaction instruction may be any one of a voice instruction, a gesture instruction, or a text instruction. This is not specifically limited in this embodiment of this application.

S704: Control, in response to the second instruction of the user, to select the first vehicle wash submode or the second vehicle wash submode.

Based on the first vehicle wash submode and the second vehicle wash submode that are displayed above and the second instruction of the user, the first vehicle wash submode or the second vehicle wash submode may be controlled to be selected.

For example, when the first vehicle wash submode and the second vehicle wash submode are displayed in a user operation interface of a vehicle-mounted display for the user to perform further selection, the second instruction of the user may be a tap operation (that is, tapping the first vehicle wash submode or the second vehicle wash submode) of the user on the user operation interface of the vehicle-mounted display. When the control apparatus detects the tap operation of the user on the first vehicle wash submode or the second vehicle wash submode, the first vehicle wash submode or the second vehicle wash submode may be controlled to be marked, or highlighted, or enabled/disabled to display an enabled state, or the like, to prompt the user that selection of the vehicle wash submode is currently completed. Refer to FIG. 3I, FIG. 3J-1 to FIG. 3J-3, and FIG. 3K-1 to FIG. 3K-3.

For example, when the first vehicle wash submode and the second vehicle wash submode are displayed in the user operation interface of the user terminal device for the user to perform further selection, the second instruction of the user may be a tap operation (that is, tapping the first vehicle wash submode or the second vehicle wash submode) of the user on the user operation interface of the terminal device. When the terminal device detects the tap operation of the user on the first vehicle wash submode or the second vehicle wash submode, the first vehicle wash submode or the second vehicle wash submode may be controlled to be marked, or highlighted, or enabled/disabled to display an enabled state, or the like, to prompt the user that selection of the vehicle wash submode is currently completed.

For example, the second instruction of the user may be a voice operation. When detecting that the voice instruction of the user indicates a to-be-selected vehicle wash submode, the control apparatus may control the first vehicle wash submode or the second vehicle wash submode to be marked, or highlighted, or enabled/disabled to display an enabled state, or the like, to prompt the user that selection of the vehicle wash submode is currently completed.

S705: Receive a third instruction of the user. The third instruction of the user instructs to enable the selected vehicle wash submode.

Similarly, the third instruction of the user may be a human-computer interaction instruction or a remote control instruction. The human-computer interaction instruction may be any one of a voice instruction, a gesture instruction, or a text instruction. This is not specifically limited in this embodiment of this application.

S706: Control, in response to the third instruction of the user, to enable the first vehicle wash submode or the second vehicle wash submode.

The first vehicle wash submode or the second vehicle wash submode may be controlled to be enabled according to the third instruction of the user.

For example, if the user completes selection of the vehicle wash submode on a vehicle-mounted display, the third instruction of the user may be an operation that the user taps "OK" on the vehicle-mounted display. When detecting the operation that the user taps "OK", the control apparatus may control to enable the first vehicle wash submode or the second vehicle wash submode. Refer to FIG. 3I, FIG. 3J-1 to FIG. 3J-3, and FIG. 3K-1 to FIG. 3K-3.

For example, if the user completes selection of the vehicle wash submode on the user terminal device, the third instruction of the user may be an operation that the user taps "OK" on the terminal device. The terminal device may generate a request message when detecting the operation that the user taps "OK", and send the request message to the control apparatus by using the server and the T-Box, and then the control apparatus controls to enable the first vehicle wash submode or the second vehicle wash submode.

For example, the third instruction of the user may alternatively be a voice operation. After selection of the vehicle wash submode is completed, the control apparatus detects that the first vehicle wash submode or the second vehicle wash submode is enabled in the voice instruction of the user, and then the control apparatus may control to enable the first vehicle wash submode or the second vehicle wash submode.

In a possible design, when the first vehicle wash submode and the second vehicle wash submode are controlled to be displayed in step S702, the first vehicle wash submode or the second vehicle wash submode may be further controlled to be selected by default. When a default selected vehicle wash submode is a vehicle wash submode expected by the user, the user may directly enable the default vehicle wash submode by using a voice instruction or by an operation of tapping "OK". When the default selected vehicle wash submode is not the vehicle wash submode expected by the user, the user may first perform a selection operation, and then instruct to enable the selected vehicle wash submode.

In a possible design, the user may directly select the first vehicle wash submode or the second vehicle wash submode by using a voice instruction. To be specific, the user may directly control, under the voice instruction of the user, to select the first vehicle wash submode or the second vehicle wash submode without performing steps S701 and S702, and then control, according to the user instruction, to enable the selected vehicle wash submode. This can reduce steps of enabling the vehicle wash submode and improve user experience.

In a possible design, as shown in FIG. 3L, a scenario mode menu in the vehicle control app may directly include the first vehicle wash submode and the second vehicle wash submode. The user may perform selection by using a "Settings>Vehicle control>Scenario mode" menu in the vehicle control app and enable the first vehicle wash submode or the second vehicle wash submode.

In a possible design, as shown in FIG. 3M, a menu of the control center of the vehicle may directly include the first vehicle wash submode and the second vehicle wash submode, and the user may perform selection by using a menu button of the control center of the vehicle and enable the first vehicle wash submode and the second vehicle wash submode.

When the second vehicle wash submode is used in the conveyor vehicle wash scenario, in a possible design, it is considered that a risk may exist when the user shifts the vehicle to the N gear when the user is not at the vehicle; when it is detected that the user performs selection by using the terminal device and enables the second vehicle wash submode, the vehicle may control to forbid from entering the second vehicle wash submode, and may generate and output a prompt message, for example, "The conveyor vehicle wash is temporarily not supported", to prompt the user. In addition, to reduce learning costs of the user, the user terminal device may display only the "first vehicle wash submode" without displaying the "vehicle wash mode" and the "second vehicle wash submode". In this way, when the user needs to enter the first vehicle wash submode, the user may directly tap the "first vehicle wash submode" on the user terminal without a need of performing selection again. Alternatively, the user terminal device may display only the "vehicle wash mode", and the "vehicle wash mode" is applicable to the first vehicle wash scenario by default, so that when the user faces the first vehicle wash scenario, the user may directly tap the "vehicle wash mode" to enter the "vehicle wash mode" without performing selection again.

It should be understood that, after the vehicle wash submode is enabled, each component on the vehicle may be automatically adjusted to a state suitable for a vehicle wash, and different vehicle wash submodes may correspond to different adjustment manners.

For example, the first vehicle wash submode is used in the manual vehicle wash scenario or another non-conveyor vehicle wash scenario. After the first vehicle wash submode is enabled, it may be controlled to automatically detect and close a door, a window, a sunroof, a charge port cover, a fuel filler cap, an automatic wiper, a sentry mode, remote control, and walk-away lock, an air conditioner is adjusted to internal circulation or is turned off, and a door handle is adjusted to retract, or the like. In addition, to enable the user to intuitively perceive a process of adjusting a status of a vehicle-mounted component, after the first vehicle wash submode is enabled, an interface of the first vehicle wash submode may be controlled to be displayed, and an adjustment status of each component may be displayed in the interface of the first vehicle wash submode. Refer to FIG. 3J-1 to FIG. 3J-3. In addition, a rear view mirror operation sub-menu may be further provided, so that in the interface of the first vehicle wash submode, the user may perform an operation to fold a rear view mirror based on an actual requirement, and may perform a tap again to unfold the rear view mirror, to meet a traveling requirement.

For example, the second vehicle wash submode is used in the conveyor vehicle wash scenario. After the second vehicle wash submode is enabled, it may be controlled to automatically detect and close a door, a window, a sunroof, a charge port cover, a fuel filler cap, an automatic wiper, a sentry mode, remote control, and walk-away lock, an air conditioner is adjusted to internal circulation or is turned off, a door handle is adjusted to retract, a rear view mirror is folded, and a vehicle gear is shifted to the N gear and remains at the N gear after the user gets off or the vehicle is powered off. In addition, to enable the user to intuitively perceive a process of adjusting a status of a vehicle-mounted component, after the second vehicle wash submode is enabled, an interface of the second vehicle wash submode may be controlled to be displayed, and an adjustment status of each component may be displayed in the interface of the second vehicle wash submode. Refer to FIG. 3K-1 to FIG. 3K-3.

In a possible design, when the adjustment status of each component is displayed in the interfaces of the first vehicle wash submode and the second vehicle wash submode, different indicators may be displayed for components in different adjustment statuses (for example, a first indicator is displayed for a component in an adjusted state, a second indicator is displayed for a component in a to-be-adjusted state, and a third indicator is displayed for a component in an adjustment failed state), so that the user can intuitively learn of the adjustment status of each component. This helps improve user experience.

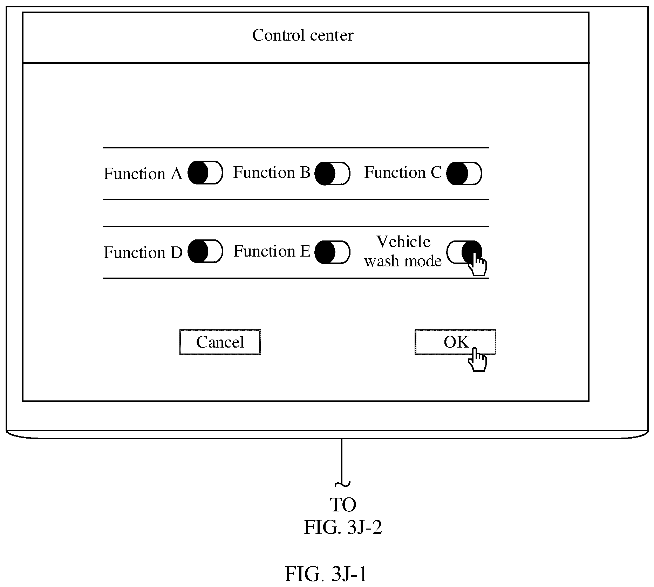

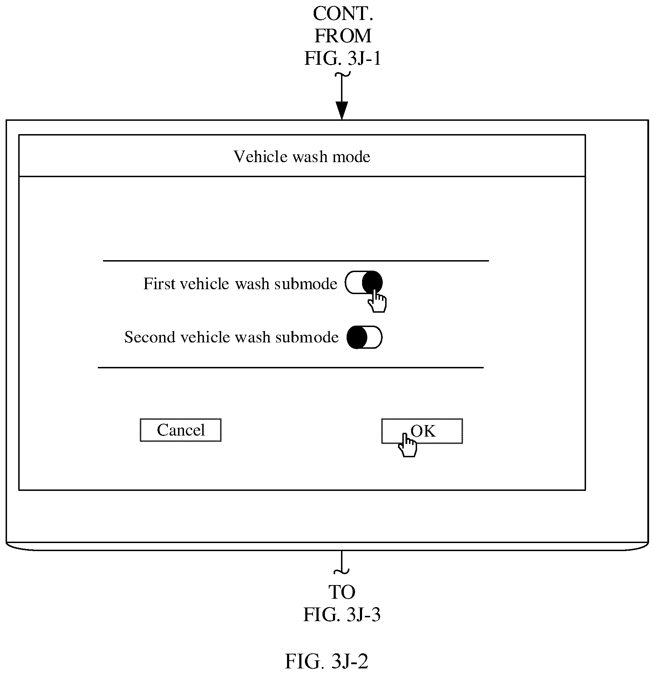

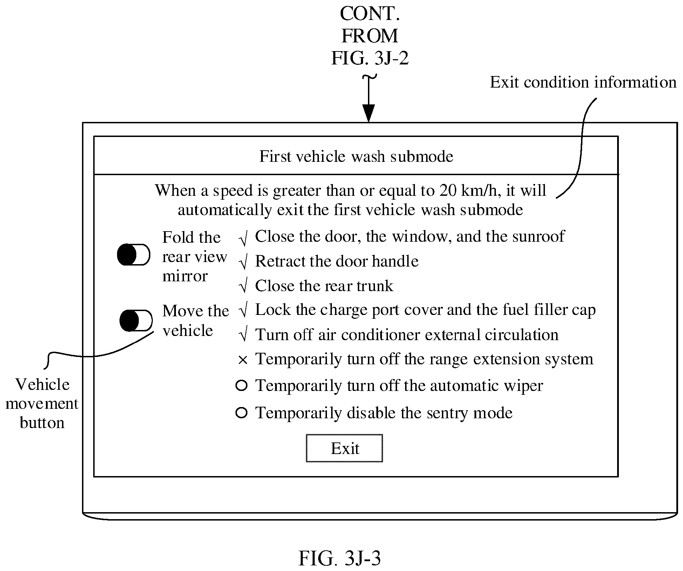

For example, as shown in FIG. 3J-1 to FIG. 3K-3, the first indicator, the second indicator, and the third indicator may be different indicator symbols. For example, the first indicator, the second indicator, and the third indicator are respectively "√", "∘ (dynamic rotation)", and "×", where the dynamic rotation represents the to-be-adjusted state or adjustment in progress.

For example, the first indicator, the second indicator, and the third indicator may be different colors. For example, the first indicator may be green, that is, a component in an adjustment success state is displayed in green font; the second indicator may be gray, that is, the component in the to-be-adjusted state is displayed in gray font; and the third indicator may be red, that is, the component in the adjustment failed state is displayed in red font.

Specific presentation forms of the first indicator, the second indicator, and the third indicator are not limited in this embodiment of this application. All forms that can be used to distinguish different adjustment statuses may be understood as different indicators.

In a possible design, the user may be notified of the adjustment status of each component in another interaction manner, for example, may be notified in a voice broadcast manner. This is not limited in this application.

In a possible design, for a component whose state is automatically recovered after a vehicle wash submode is exited, a fourth indicator may be controlled to be displayed on the interfaces of the first vehicle wash submode and the second vehicle wash submode, so that the user can intuitively learn of the status of each component after the vehicle wash submode is exited.

For example, the fourth indicator may be a specific indicator symbol, for example, the component whose state is automatically recovered after the vehicle wash submode is exited is marked as "☆". The fourth indicator may alternatively be a specific text, for example, the component whose state is automatically recovered after the vehicle wash submode is exited is marked as "Temporarily disable/turn off" (refer to FIG. 3J-1 to FIG. 3K-3). This is not limited.

In a possible design, the user may be prompted, in another interaction manner, with the component whose state is automatically recovered after the vehicle wash mode is exited, for example, may be prompted in a voice broadcast manner. This is not limited in this application.

It should be noted that, in a conventional solution, after a vehicle wash mode is entered, a user is usually not explicitly prompted with a speed of exiting the vehicle wash mode, resulting in poor user experience. However, in this embodiment of this application, exit condition information of the vehicle wash submode may be controlled to be displayed in the interfaces of the first vehicle wash submode and the second vehicle wash submode. The exit condition information indicates to exit the vehicle wash submode when the speed is greater than or equal to a preset value. Refer to "When a speed is greater than or equal to 20 km/h, it will automatically exit the first vehicle wash submode" in FIG. 3J-1 to FIG. 3J-3 and "When a speed is greater than or equal to 10 km/h, it will automatically exit the second vehicle wash submode" in FIG. 3K-1 to FIG. 3K-3, so that the user can more intuitively learn of an exit condition of the vehicle wash submode. This improves user experience.

In a possible design, a shortcut key for adjusting the status of the component may be provided for the user on the foregoing interface of the vehicle wash submode, so that after the foregoing interface of the vehicle wash submode is displayed, the user may re-open, based on the key, a door, a window, a charge port cover, a fuel filler cap, an automatic wiper, a sunroof, a sentry mode, remote control, or walk-away lock, or re-adjust an air conditioner to external circulation, or re-adjust a door handle to be extended, or unfold a rear view mirror. Correspondingly, an indicator for the status of the component is also adjusted to the third indicator.

In a possible design, the interface of the vehicle wash submode may further be controlled to display a vehicle movement key. As shown in FIG. 3J-1 to FIG. 3J-3, the vehicle movement key is used to obtain vehicle movement authorization for a preset quantity of times (for example, once or twice) or first preset duration (for example, 5 minutes or 10 minutes), so that after the user leaves the vehicle, a vehicle wash person can drive the vehicle from parking space to washing space based on the vehicle movement key to wash the vehicle, and then drive the vehicle back to the parking space after the vehicle wash is completed.

It should be understood that, generally, when the vehicle is started (for example, braked and shifted to the D gear), the vehicle automatically detects whether a valid vehicle key exists. If no valid vehicle key is detected, the vehicle cannot be started and prompts the user. If the valid vehicle key is detected, the vehicle is normally started. However, after the user leaves the vehicle with a vehicle key, when the vehicle wash person needs to move the vehicle, the vehicle cannot move because no valid vehicle key is detected when the vehicle is started. In view of this, in this application, after the vehicle wash person taps the vehicle movement key, the vehicle may not detect whether a valid vehicle key exists when the vehicle wash person starts the vehicle for the preset quantity of times or the first preset duration, for normally starting the vehicle to implement vehicle movement.

In a possible design, after the vehicle wash submode is enabled, a traveling speed of the vehicle may be controlled to be limited. In this way, it can be avoided that the vehicle wash submode is automatically exited when the speed is excessively high. In addition, when the user leaves the vehicle, the user can easily track the vehicle when the vehicle is stolen.

In a possible design, after the vehicle wash submode is enabled, display and locking of an interface of the vehicle wash submode may be controlled, to avoid user privacy leakage because the vehicle wash person switches the interface of the vehicle wash mode to another interface to perform an operation (for example, viewing or modifying a vehicle configuration) after the user leaves the vehicle.

Optionally, after the interface of the vehicle wash submode is locked, a locked state may be exited by entering a password.

Optionally, the locked interface of the vehicle wash submode may take up a whole screen.

In a possible design, in a vehicle wash scenario presented when the user leaves the vehicle (for example, the manual vehicle wash scenario), after the vehicle wash submode is enabled, a glove box may be controlled to be locked, to prevent the vehicle wash person from viewing a valuable or private item in the glove box.

In a possible design, when the vehicle wash scenario is the conveyor vehicle wash, the AVH function of the vehicle may be controlled to be disabled, to prevent the vehicle from being lock due to an AVH hydraulic pressure.

For example, when the second vehicle wash submode is used in the conveyor vehicle wash scenario, after the second vehicle wash submode is enabled, the AVH function may be automatically disabled. Alternatively, before the second vehicle wash mode is enabled, the user may be prompted to first shift the vehicle to the P gear (it should be understood that after the vehicle is shifted to the P gear, the AVH function is triggered to be disabled), and after the second vehicle wash submode is enabled, the vehicle is controlled to be shifted to the N gear.

In Embodiment 5, control operations performed after vehicle wash submodes are enabled are mainly described by using the vehicle wash submodes as an example. It should be understood that the foregoing control operations (for example, controlling to display a vehicle movement key, controlling to display a component status, controlling to lock an interface of the vehicle wash mode, and controlling to limit a speed) may also be performed after vehicle wash modes (that is, a vehicle wash mode that does not include a vehicle wash submode) corresponding to Embodiment 1 to Embodiment 4 are enabled, which is not limited. In addition, it should be further noted that content in the foregoing embodiments may be used in combination with each other. This is not limited in this application.

Based on the foregoing embodiments and a same technical concept, an embodiment of this application further provides a control apparatus. For descriptions of related features, refer to Embodiment 1 to Embodiment 3. Details are not described herein again. As shown in FIG. 8, a control apparatus 800 includes:
an obtaining module 801, configured to: when a first mode of a vehicle is enabled, obtain a first parameter of the vehicle, where the first parameter includes a speed and/or a gear; and
a control module 802, configured to: when the first parameter meets a first condition, perform a first operation corresponding to the first mode on the vehicle, where the first operation includes disabling an automatic power-on function of the vehicle.

In a possible implementation, the first operation further includes controlling the vehicle to be powered off and/or disabling a first function of the vehicle, and the first function includes at least one of an automatic vehicle locking function, a warning function, a remote monitoring function, or a remote control function.

In a possible implementation, the first operation further includes adjusting a status of a component of the vehicle, and the component includes one or more of the following: a gear shifter, a door, a window, a door handle, a charge port cover, a fuel filler cap, a wiper, a rear view mirror, a sunroof, or a vehicle-mounted device.

In a possible implementation, the obtaining module 801 is further configured to: before the control module 802 enables the first mode of the vehicle, detect a first instruction, where the first instruction instructs to enable the first mode, and the first instruction includes a human-computer interaction instruction or a remote control instruction.

In a possible implementation, the first condition includes that the speed of the vehicle is less than or equal to a first threshold and/or the gear of the vehicle is a first gear.

In a possible design, the first mode includes a first submode, the first submode is used to clean a first area inside the vehicle, and the first area includes a first display of the vehicle. The obtaining module 801 is further configured to obtain a first instruction, where the first instruction instructs to enable the first submode; the control module 802 is further configured to enable the first submode in response to the first instruction, and perform a second operation corresponding to the first submode, where the second operation includes adjusting the gear of the vehicle to a P gear.

In a possible design, the control module 802 is further configured to determine that the vehicle meets a second condition, where the second condition includes that the first mode is enabled on the vehicle, a second submode is not enabled on the vehicle, the speed of the vehicle is less than or equal to a second threshold, or a status of the gear of the vehicle is the P gear or an N gear. The second submode is used to move the vehicle to a first location.

In a possible design, the obtaining module 801 is further configured to obtain a second instruction, where the second instruction instructs to disable the first submode; and the control module 802 is further configured to disable the first submode in response to the second instruction, where the second instruction includes at least one of a power-on signal, a vehicle locking signal, or a user instruction.

In a possible design, the first mode includes the second submode, and the second submode is used to move the vehicle to the first location; the obtaining module 801 is further configured to obtain a third instruction, where the third instruction instructs to enable the second submode, and the third instruction includes a human-computer interaction instruction or a remote control instruction; and the control module 802 is further configured to enable the second submode in response to the third instruction, and perform a third operation corresponding to the second submode, where the third operation includes adjusting the gear of the vehicle to the N gear.

In a possible design, the control module 802 is further configured to determine that the vehicle meets a third condition, where the third condition includes that the first mode is enabled on the vehicle; the first submode is not enabled on the vehicle, where the first submode is used to clean the inside of the vehicle; the speed of the vehicle is less than or equal to a third threshold; or the status of the gear of the vehicle is a D gear.

In a possible design, the obtaining module 801 is further configured to obtain a fourth instruction, where the fourth instruction instructs to disable the second submode; and the control module 802 is further configured to disable the second submode in response to the fourth instruction; or the control module 802 is further configured to disable the second submode when detecting that the speed of the vehicle is greater than or equal to a fourth threshold and/or that the gear of the vehicle is not the N gear.

In a possible design, the control module 802 is further configured to control the exterior rear view mirror or the exterior rear view mirror of the vehicle to maintain a first state.

In a possible design, the obtaining module 801 is further configured to obtain a fifth instruction, where the fifth instruction indicates a fourth operation, and the fourth operation is an operation opposite to the first operation; and the control module 802 is further configured to control a prompt apparatus to output first prompt information, where the first prompt information indicates risk information corresponding to the fourth operation.

In a possible design, the control module 802 is further configured to control the prompt apparatus to output second prompt information, where the second prompt information indicates that a fifth operation in the first operation fails to be performed; and the obtaining module 801 is further configured to obtain a sixth instruction, where the sixth instruction instructs to perform the fifth operation again.

In a possible design, the obtaining module 801 is further configured to obtain a seventh instruction, where the seventh instruction instructs to disable the first mode; and the control module 802 is further configured to disable the first mode in response to the seventh instruction; or the control module 802 is further configured to disable the first mode when detecting that the speed of the vehicle is greater than or equal to a fifth threshold, where the seventh instruction includes a remote control instruction or a human-computer interaction instruction.

In a possible design, the obtaining module 801 is further configured to obtain an eighth instruction, where the first instruction instructs to enable the first mode, and the first instruction includes a human-computer interaction instruction or a remote control instruction.

In a possible design, the apparatus 800 further includes a storage module 803. The storage module 803 is configured to store status information of the vehicle before the vehicle is in a power-off state, and the obtaining module 801 is further configured to obtain the status information of the vehicle after the vehicle is powered on.

In a possible design, the control module 802 is further configured to exit a vehicle owner account and enter a guest mode.

In a possible design, the obtaining module 801 is further configured to obtain a power-on signal, and control, based on the power-on signal, the vehicle to be powered on; and the control module 802 is further configured to re-enter the first mode; or the control module 802 is further configured to control the prompt apparatus to output third prompt information, where the third prompt information indicates a user to choose whether to re-enter the first mode.

In a possible design, after the first mode of the vehicle is enabled, the obtaining module 801 is further configured to obtain a power-off signal; and the control module 802 is further configured to control, based on the power-off signal, the vehicle to be powered off.

Based on the foregoing embodiments and a same technical concept, an embodiment of this application further provides a control apparatus. For descriptions of related features, refer to Embodiment 4 to Embodiment 5. Details are not described herein again. As shown in FIG. 9, a control apparatus 900 includes a control module 901 and a transceiver module 902.

The control module 901 is configured to: when a preset condition is met, control to generate a prompt message, where the prompt message is used to prompt a user to enable a vehicle wash mode, and the preset condition includes that a vehicle is located in a vehicle wash shop and in a parked state.

The transceiver module 902 is configured to control to receive a user instruction, where the user instruction instructs to enable the vehicle wash mode.

The control module 901 is further configured to control, according to the user instruction, to enable the vehicle wash mode.

In a possible design, that a vehicle is located in a vehicle wash shop and is in a parked state may include at least one of the following: A navigation destination of the vehicle is the vehicle wash shop, and the vehicle arrives at the destination and is parked; the vehicle travels to a place at which the user previously enables the vehicle wash mode, and is parked; the vehicle perceives that a current parking location of the vehicle is the vehicle wash shop; and the like.

In a possible design, the control module 901 may be further configured to control to release and forbid a Bluetooth connection between the vehicle and a terminal device carried by the user.

In a possible design, the control module 901 may be further configured to control to stop and forbid remote control on the vehicle.

In a possible design, after controlling, according to the user instruction, to enable the vehicle wash mode, the control module 901 may be further configured to control to display an adjustment status of a component of the vehicle, where a first indicator is displayed for a component in an adjusted state, a second indicator is displayed for a component in a to-be-adjusted state, and a third indicator is displayed for a component in an adjustment failed state.

In a possible design, the control module 901 may be further configured to control to display a fourth indicator for a component whose state is automatically recovered after the vehicle wash mode is exited.

In a possible design, after controlling, according to the user instruction, to enable the vehicle wash mode, the control module 901 may be further configured to control to display exit condition information of the vehicle wash mode, where the exit condition information indicates to exit the vehicle wash mode when a speed is greater than or equal to a preset value.

In a possible design, the vehicle wash mode may include a first vehicle wash submode and a second vehicle wash submode, the first vehicle wash submode is used in a first vehicle wash scenario, and the second vehicle wash submode is used in a second vehicle wash scenario. The transceiver module 902 may be further configured to receive a first instruction of the user. The control module 901 may be further configured to control, in response to the first instruction of the user, to display the first vehicle wash submode and the second vehicle wash submode. The transceiver module 902 may be further configured to receive a second instruction of the user. The control module 901 may be further configured to control, in response to the second instruction of the user, to select the first vehicle wash submode or the second vehicle wash submode. The transceiver module 902 may be further configured to receive a third instruction of the user. The control module 901 may be further configured to control, in response to the third instruction of the user, to enable the first vehicle wash submode or the second vehicle wash submode.

In a possible design, the control module 901 may be further configured to control to display a vehicle movement key, where the vehicle movement key is used to obtain vehicle movement authorization for a preset quantity of times or first preset duration.

In a possible design, the control module 901 may be further configured to control to limit a traveling speed of the vehicle.

In a possible design, the control module 901 may be further configured to control to display and lock the interface of the vehicle wash mode.

In a possible design, the control module 901 may be further configured to control to lock a glove box to be incapable of mechanical opening.

In a possible design, when a vehicle wash scenario is a conveyor vehicle wash, the control module 901 may be further configured to control to disable an AVH function of the vehicle.

In a possible design, the control module 901 may be further configured to: when the speed of the vehicle is greater than or equal to a first preset value, control to turn on a light of the vehicle; or when the speed of the vehicle is less than or equal to a second preset value and holding duration is greater than or equal to second preset duration, control to turn off a light of the vehicle.

In a possible design, the control module 901 may be further configured to: when a state of charge of the vehicle is less than or equal to a third preset value, control to turn off a vehicle-mounted air conditioner.

An embodiment of this application further provides a chip system. Refer to FIG. 10. A chip system 1000 includes at least one processor. When program instructions are executed in at least one processor 1001, the vehicle control method in any one of the foregoing method embodiments is implemented.

Optionally, the chip system further includes a communication interface 1003, and the communication interface is configured to input or output information.

Optionally, the chip system further includes a memory 1002. The memory 1002 is coupled to the processor through the communication interface 1003, and is configured to store the foregoing instructions, so that the processor reads, through the communication interface 1003, the instructions stored in the memory.

It should be understood that a connection medium between the processor 1001, the memory 1002, and the communication interface 1003 is not limited in this embodiment of this application. In this embodiment of this application, in FIG. 10, the memory 1002, the processor 1001, and the communication interface 1003 are connected by using a communication bus 1004. The bus is represented by a bold line in FIG. 10, and a connection manner between other components is merely an example for description, and is not limited thereto. The bus may include an address bus, a data bus, a control bus, and the like. For ease of representation, in FIG. 10, only one bold line is used for representation, but it does not mean that there is only one bus, only one type of bus, or the like.

An embodiment of this application further provides a computer program product including instructions. When a computer executes the computer program product, the computer is enabled to perform the vehicle control method in any one of the foregoing embodiments.

An embodiment of this application provides a computer-readable storage medium. The computer-readable storage medium stores a computer program or instructions, and when the computer program or instructions is/are run, the vehicle control method in any one of the foregoing embodiments is implemented.

An embodiment of this application further provides a computing device, including a processor. The processor is connected to a memory, the memory stores a computer program or instructions, and the processor is configured to execute the computer program or the instructions stored in the memory, so that the computing device performs the vehicle control method in any one of the foregoing embodiments.

An embodiment of this application further provides a chip. The chip includes a circuit configured to perform the vehicle control method in any one of the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the protection scope defined by the following claims and their equivalent technologies.

## Claims

1. A vehicle control method, comprising:
when a first mode of a vehicle is enabled, obtaining a first parameter of the vehicle, wherein the first parameter comprises a speed and/or a gear; and
when the first parameter meets a first condition, performing a first operation corresponding to the first mode, wherein the first operation comprises disabling an automatic power-on function of the vehicle.

2. The method according to claim 1, wherein the first operation further comprises controlling the vehicle to be powered off and/or disabling a first function of the vehicle, and the first function comprises at least one of an automatic vehicle locking function, a warning function, a remote monitoring function, or a remote control function.

3. The method according to claim 1 or 2, wherein the first operation further comprises adjusting a status of a component of the vehicle, and the component comprises one or more of the following:
a gear shifter, a rear trunk lock, a front trunk lock, a door lock, a window, a door handle, a charge port cover, a fuel filler cap, a wiper, an exterior rear view mirror, an interior rear view mirror, a sunroof, a panoramic roof, a sunshade, a steering wheel, or a seat.

4. The method according to any one of claims 1 to 3, wherein the first condition comprises that the speed of the vehicle is less than or equal to a first threshold and/or the gear of the vehicle is a first gear.

5. The method according to any one of claims 1 to 4, wherein the first mode comprises a first submode, the first submode is used to clean a first area of the vehicle, and the first area comprises a first display of the vehicle; and
the method further comprises:
obtaining a first instruction, wherein the first instruction instructs to enable the first submode;
enabling the first submode in response to the first instruction; and
performing a second operation corresponding to the first submode, wherein the second operation comprises adjusting the gear of the vehicle to a P gear.

6. The method according to claim 5, wherein the method further comprises:
determining that the vehicle meets a second condition, wherein the second condition comprises: the first mode is enabled on the vehicle, a second submode is not enabled on the vehicle, the speed of the vehicle is less than or equal to a second threshold, or a status of the gear of the vehicle is the P gear or an N gear, wherein
the second submode is used to move the vehicle to a first location.

7. The method according to claim 5 or 6, wherein the method further comprises:
obtaining a second instruction, wherein the second instruction instructs to disable the first submode; and
disabling the first submode in response to the second instruction, wherein
the second instruction comprises at least one of a power-on signal, a vehicle locking signal, or a user instruction.

8. The method according to any one of claims 1 to 7, wherein the first mode comprises the second submode, and the second submode is used to move the vehicle to the first location; and
the method further comprises:
obtaining a third instruction, wherein the third instruction instructs to enable the second submode;
enabling the second submode in response to the third instruction; and
performing a third operation corresponding to the second submode, wherein the third operation comprises adjusting the gear of the vehicle to the N gear.

9. The method according to claim 8, wherein the method further comprises:
determining that the vehicle meets a third condition, wherein the third condition comprises: the first mode is enabled on the vehicle, the first submode is not enabled on the vehicle, the speed of the vehicle is less than or equal to a third threshold, or the status of the gear of the vehicle is a D gear, wherein
the first submode is used to clean the first area of the vehicle, and the first area comprises the first display of the vehicle.

10. The method according to claim 8 or 9, wherein the method further comprises:
obtaining a fourth instruction, wherein the fourth instruction instructs to disable the second submode; and disabling the second submode in response to the fourth instruction; or
disabling the second submode when detecting that the speed of the vehicle is greater than or equal to a fourth threshold and/or that the gear of the vehicle is not the N gear.

11. The method according to any one of claims 1 to 10, wherein the method further comprises:
controlling the exterior rear view mirror or the exterior rear view mirror of the vehicle to maintain a first state.

12. The method according to any one of claims 1 to 11, wherein the method further comprises:
obtaining a fifth instruction, wherein the fifth instruction indicates a fourth operation, and the fourth operation is an operation opposite to the first operation; and
controlling a prompt apparatus to output first prompt information, wherein the first prompt information indicates risk information corresponding to the fourth operation.

13. The method according to any one of claims 1 to 12, wherein the method further comprises:
controlling the prompt apparatus to output second prompt information, wherein the second prompt information indicates that a fifth operation in the first operation fails to be performed; and
obtaining a sixth instruction, wherein the sixth instruction instructs to perform the fifth operation again, wherein
the sixth instruction comprises a remote control instruction or a human-computer interaction instruction.

14. The method according to any one of claims 1 to 13, wherein the method further comprises:
obtaining a seventh instruction, wherein the seventh instruction instructs to disable the first mode; and
disabling the first mode in response to the seventh instruction; or
disabling the first mode when detecting that the speed of the vehicle is greater than or equal to a fifth threshold, wherein
the seventh instruction comprises a remote control instruction or a human-computer interaction instruction.

15. The method according to any one of claims 1 to 14, wherein after the first mode of the vehicle is enabled, the method further comprises:
storing status information of the vehicle before the vehicle is in a power-off state; and
obtaining the status information of the vehicle after the vehicle is powered on.

16. The method according to any one of claims 1 to 15, wherein the method further comprises:
exiting a vehicle owner account and entering the guest mode.

17. The method according to any one of claims 1 to 16, wherein the method further comprises:
obtaining a power-on signal, and controlling, based on the power-on signal, the vehicle to be powered on; and re-entering the first mode; or
controlling the prompt apparatus to output third prompt information, wherein the third prompt information indicates a user to choose whether to re-enter the first mode.

18. The method according to any one of claims 1 to 17, wherein after the first mode of the vehicle is enabled, the method further comprises:
obtaining a power-off signal; and
controlling, based on the power-off signal, the vehicle to be powered off.

19. A vehicle control method, comprising:
generating a prompt message when a preset condition is met, wherein the prompt message is used to prompt a user to enable a vehicle wash mode, and the preset condition comprises that a vehicle is located in a vehicle wash shop and is in a parked state;
receiving a user instruction, wherein the user instruction instructs to enable the vehicle wash mode; and
enabling the vehicle wash mode according to the user instruction.

20. The method according to claim 19, wherein that a vehicle is located in a vehicle wash shop and is in a parked state comprises at least one of the following:
a navigation destination of the vehicle is the vehicle wash shop, and the vehicle arrives at the destination and is parked;
the vehicle travels to a place at which the user previously enables the vehicle wash mode, and is parked; and
the vehicle perceives that a current parking location of the vehicle is the vehicle wash shop.

21. The method according to claim 19 or 20, wherein the method further comprises:
controlling to release and forbid a Bluetooth connection between the vehicle and a terminal device carried by the user.

22. The method according to any one of claims 19 to 21, wherein the method further comprises:
controlling to stop and forbid remote control on the vehicle.

23. The method according to any one of claims 19 to 22, wherein after the enabling the vehicle wash mode according to the user instruction, the method further comprises:
controlling to display an adjustment status of a component of the vehicle, wherein a first indicator is displayed for a component in an adjusted state, a second indicator is displayed for a component in a to-be-adjusted state, and a third indicator is displayed for a component in an adjustment failed state.

24. The method according to claim 23, wherein the controlling to display an adjustment status of a component of the vehicle comprises: controlling to display a fourth indicator for a component whose state is automatically recovered after the vehicle wash mode is exited.

25. The method according to claim 23, wherein after the enabling the vehicle wash mode according to the user instruction, the method further comprises:
controlling to display exit condition information of the vehicle wash mode, wherein the exit condition information indicates to exit the vehicle wash mode when a speed is greater than or equal to a preset value.

26. The method according to any one of claims 19 to 25, wherein the vehicle wash mode comprises a first vehicle wash submode and a second vehicle wash submode, the first vehicle wash submode is used in a first vehicle wash scenario, and the second vehicle wash submode is used in a second vehicle wash scenario;
the receiving a user instruction comprises:
receiving a first instruction of the user;
controlling, in response to the first instruction of the user, to display the first vehicle wash submode and the second vehicle wash submode;
receiving a second instruction of the user;
controlling, in response to the second instruction of the user, to select the first vehicle wash submode or the second vehicle wash submode; and
receiving a third instruction of the user; and
the enabling the vehicle wash mode according to the user instruction comprises:
controlling, in response to the third instruction of the user, to enable the first vehicle wash submode or the second vehicle wash submode.

27. The method according to any one of claims 19 to 26, wherein the method further comprises:
controlling to display a vehicle movement key, wherein the vehicle movement key is used to obtain vehicle movement authorization for a preset quantity of times or first preset duration; and/or
controlling to limit a traveling speed of the vehicle; and/or
controlling to display and lock an interface of the vehicle wash mode; and/or
controlling to lock a glove box to be incapable of mechanical opening.

28. The method according to any one of claims 19 to 27, wherein when a vehicle wash scenario is a conveyor vehicle wash, the method further comprises: controlling to disable an automatic vehicle hold AVH function of the vehicle.

29. The method according to any one of claims 19 to 28, wherein the method further comprises:
when the speed of the vehicle is greater than or equal to a first preset value, controlling to turn on a light of the vehicle; or
when the speed of the vehicle is less than or equal to a second preset value and holding duration is greater than or equal to second preset duration, controlling to turn off a light of the vehicle.

30. The method according to any one of claims 19 to 29, wherein the method further comprises:
when a state of charge of the vehicle is less than or equal to a third preset value, controlling to turn off a vehicle-mounted air conditioner.

31. A control apparatus, comprising:
a controller and a memory, wherein
the memory is configured to store a program; and
the controller is configured to execute the program stored in the memory, so that the apparatus implements the method according to any one of claims 1 to 18, and/or implements the method according to any one of claims 19 to 30.

32. A vehicle, comprising the apparatus according to claim 31.

33. A computer-readable storage medium, wherein the computer-readable storage medium stores a computer program, and when the computer program is run, the method according to any one of claims 1 to 18 is implemented, and/or the method according to any one of claims 19 to 30 is implemented.

34. A computer program product, wherein when the computer program product runs on a computer, the computer is enabled to perform the method according to any one of claims 1 to 18, and/or the method according to any one of claims 19 to 30.
